# EUROPÄISCHE PATENTSCHRIFT

(11) **EP 3 209 530 B1**
(45) Veröffentlichungstag und Bekanntmachung des Hinweises auf die Patenterteilung: **26.09.2018**
(21) Anmeldenummer: 15777931.5
(22) Anmeldetag: 08.10.2015
(51) Int. Cl.: B60T 13/68, B60T 15/02, F16K 31/06

(54) **KIPPANKERVENTIL FÜR EINE BREMSE EINES FAHRZEUGS UND VERFAHREN ZUM BETREIBEN EINES KIPPANKERVENTILS**
TILTING ARMATURE VALVE FOR VEHICLE BRAKE AND ITS CONTROL METHOD
SOUPAPE À ARMATURE BASCULANTE POUR FREINS DE VÉHICULE AUTOMOBILE ET PROCÉDÉ DE CONTRÔLE DE CETTE SOUPAPE

(30) Priorität: 20.10.2014 DE 102014115205
(43) Veröffentlichungstag der Anmeldung: 30.08.2017
(73) Patentinhaber: KNORR-BREMSE Systeme für Nutzfahrzeuge GmbH, 80809 München (DE)
(72) Erfinder: MILLER, Bernhard, 71263 Weil der Stadt (DE); HECKER, Falk, 71706 Markgröningen (DE)
(86) Internationale Anmeldenummer: PCT/EP2015/073226
(87) Internationale Veröffentlichungsnummer: WO 2016/062542

(56) Entgegenhaltungen:
- EP-A1- 0 235 451
- CH-A- 481 335
- DE-A1- 2 611 355
- DE-A1- 3 334 072
- DE-A1- 3 437 487
- DE-A1- 3 619 818
- DE-A1- 3 834 445
- DE-A1- 19 505 233
- DE-A1-102005 037 964
- DE-A1-102005 038 215
- FR-A1- 2 847 326
- GB-A- 2 065 833

## Beschreibung

Die vorliegende Erfindung bezieht sich auf ein Kippankerventil für eine Bremse eines Fahrzeugs und ein Verfahren zum Betreiben eines Kippankerventils.

In schweren Nutzfahrzeugen wird die Parkbremse üblicherweise per FederspeicherBremszylinder betätigt, indem die per Druckluft vorgespannte Feder durch Entlüften der Federspeicherzylinder entspannt wird und somit auf die Bremse wirken kann. Traditionell wird der Federspeicher über ein manuell zu betätigendes pneumatisches Ventil entlüftet, das in der Fahrerkabine angeordnet ist.

Die Druckschrift CH 481 335 A offenbart ein Steuerventil.

Die Druckschrift DE 34 37 487 A1 offenbart ein bistabiles Magnetventil.

Die Druckschrift DE 26 11 355 A1 offenbart eine Druckmittel-Bremsanlage für Fahrzeuge.

Die Druckschrift DE 10 2005 037 964 A1 offenbart ein Elektromagnetventil.

Es ist die Aufgabe der vorliegenden Erfindung ein verbessertes Ventil für eine Bremse zu schaffen. Die Betätigung soll auf elektronischem Wege erfolgen, um zusätzliche Funktionen wie automatisches Einlegen und Lösen einer Parkbremse zu ermöglichen.

Diese Aufgabe wird durch ein Kippankerventil für eine Bremse eines Fahrzeugs sowie ein Verfahren zum Betreiben eines Kippankerventils gemäß den unabhängigen Ansprüchen gelöst. Vorteilhafte Ausgestaltungen ergeben sich aus den jeweiligen Unteransprüchen und der nachfolgenden Beschreibung.

Eine Halteeinrichtung kann eine Bi-Stabilität einer Stelleinrichtung eines Ventils schaffen. Dabei kann die Halteeinrichtung die Stelleinrichtung in den Endpositionen halten, wobei die Stelleinrichtung zwischen den Endpositionen mittels einer Betätigungseinrichtung bewegt werden kann.

Ein Kippankerventil für eine Bremse eines Fahrzeugs umfasst zumindest:
eine Stelleinrichtung, wobei die Stelleinrichtung zwischen einer ersten Endposition und einer zweiten Endposition bewegbar ist;
eine Betätigungseinrichtung, die ausgebildet ist, die Stelleinrichtung in die erste Endposition und/oder die zweite Endposition zu bewegen; und
eine Halteeinrichtung, die ausgebildet ist, eine auf die Stelleinrichtung wirkende Fixierkraft bereitzustellen, wenn sich die Stelleinrichtung in der ersten Endposition und/oder der zweiten Endposition befindet, um die Stelleinrichtung in der ersten Endposition und/oder der zweiten Endposition zu fixieren.

Die Betätigungseinrichtung ist auf einer Seite der Stelleinrichtung angeordnet.

Dabei weist die Betätigungseinrichtung zumindest eine erste Wickeleinrichtung und eine zweite Wickeleinrichtung auf, die beide um einen Spulenkern angeordnet sind.

Weiterhin weist die Stelleinrichtung eine Öffnung auf, durch die der Spulenkern führt. Unter einer Wickeleinrichtung kann dabei eine Spule verstanden werden. So kann unter einer Wickeleinrichtung eine Mehrzahl von Windungen auf einen Spulenträger verstanden werden. Dabei können die erste Wickeleinrichtung und die zweite Wickeleinrichtung einen gemeinsamen Spulenträger aufweisen.

Unter einem Fahrzeug kann ein Schienenfahrzeug oder ein Nutzfahrzeug wie ein Lastkraftwagen oder ein Omnibus verstanden werden. Das Fahrzeug kann eine Bremse aufweisen. Dabei kann unter einer Bremse ein elektronisches, pneumatisches oder hydraulisches Bremssystem verstanden werden. Insbesondere kann unter einer Bremse eine Parkbremse, eine Federspeicherbremse oder eine Feststellbremse verstanden werden. Dabei kann unter einer Bremse eine Bremse verstanden werden, die nach einem Fail-Safe-Prinzip arbeitet, wobei auch ein Ausfall eines Betätigungsmediums wie ein Fluid, beispielsweise Luft, eine Bremsfunktion der Bremse nicht direkt und sofort verhindert. Unter einem Kippankerventil kann ein bistabiles Kippankerventil verstanden werden. Dabei kann unter einer Stelleinrichtung des Kippankerventils ein Anker oder ein Kippanker verstanden werden. Ein Bewegungsraum der Stelleinrichtung kann durch zumindest einen Anschlag begrenzt sein. Eine erste Endposition und eine zweite Endposition der Stelleinrichtung können durch den zumindest einen Anschlag bestimmt sein. Unter einer Betätigungseinrichtung kann eine Einrichtung verstanden werden, die ansprechend auf ein Signal oder ein Steuersignal, beispielsweise ein elektrisches oder pneumatisches Signal, eine Bewegung der Stelleinrichtung bewirkt. So kann die Betätigungseinrichtung eine Schnittstelle zum Empfangen eines Signals oder eines Steuersignals aufweisen. Die Betätigungseinrichtung kann ausgebildet sein, die Stelleinrichtung zwischen den beiden Endpositionen zu bewegen oder die Stelleinrichtung in einer der beiden Endpositionen zu halten. So kann die Betätigungseinrichtung ausgebildet sein, eine Betätigungskraft auf die Stelleinrichtung auszuüben oder bereitzustellen, um die Stelleinrichtung zu bewegen oder in einer Position zu halten. Die Halteeinrichtung kann ausgebildet sein, eine Kraft auf die Stelleinrichtung auszuüben. Dabei kann die von der Halteeinrichtung auf die Stelleinrichtung ausgeübte Fixierkraft von einer Position der Stelleinrichtung abhängig sein. Weiterhin kann die von der Halteeinrichtung auf die Stelleinrichtung wirkende Fixierkraft geringer als eine von der aktivierten Betätigungseinrichtung auf die Stelleinrichtung wirkende Betätigungskraft sein. So kann die Halteeinrichtung ausgebildet sein, die Stelleinrichtung in der ersten Endposition und/oder der zweiten Endposition zu fixieren, wenn die Betätigungseinrichtung unaktiviert ist. Das Kippankerventil kann ausgebildet sein, ein am Eingang anliegendes Fluid an den Ausgang zu leiten. Dabei kann durch die Position der Stelleinrichtung ein Fluidstrom gesteuert werden. Vorteilhaft ist dabei ein Einsatz des Kippankerventils als Schließer beziehungsweise Ein-/Auslassventil, als Öffner oder ein universeller Einsatz als Wechsler oder bistabiler Wechsler möglich. Vorteilhaft wird ein Kippankerventil mit einem einfachen und robusten Design geschaffen. Dabei kann das Kippankerventil kostengünstig hergestellt werden.

Günstig ist es auch, wenn die Stelleinrichtung an einer Stirnseite der Stelleinrichtung mittels eines Lagers gelagert ist. Ferner kann das Lager als ein Gleitlager ausgebildet sein. Günstig ist es auch, wenn das Lager als ein Nadellager ausgebildet ist oder das Lager eine Nadelrolle umfasst. So kann vorteilhaft eine reibungsarme Ankeraufhängung (beispielsweise < 0,1 N) mit einer verschleißarmen Ankerlagerung geschaffen werden. Ein Nadellager kann dabei eine präzise Ankerführung bieten. Dabei kann die Nadelrolle einen Durchmesser von weniger als drei Millimetern aufweisen. Die Nadelrolle kann einen Durchmesser innerhalb eines Toleranzbereichs um zweieinhalb Millimeter aufweisen. Dabei kann die Nadelrolle aus einem gehärteten Metall, beispielsweise Stahl, gefertigt sein.

Die Halteeinrichtung kann eine Schnappfeder zum Fixieren der Stelleinrichtung und eine Ventilschließfeder zum Bewegen der Stelleinrichtung umfassen. So kann die Halteeinrichtung zumindest zweigeteilt ausgeformt sein. Dabei kann die Schnappfeder ausgebildet sein, die Betätigungseinrichtung in der zweiten Endposition zu halten. Die Ventilschließfeder kann ausgebildet sein, eine Schließkraft in eine von der Betätigungseinrichtung wegführende Richtung auf die Stelleinrichtung auszuüben, insbesondere wenn die Stelleinrichtung in der ersten Endposition angeordnet ist. Ein erster Teilbereich der Ventilschließfeder kann auf einer der Betätigungseinrichtung zugewandten Seite der Stelleinrichtung angeordnet sein und eine Kraft auf die Stelleinrichtung ausüben, um die Stelleinrichtung in Richtung der ersten Endposition zu bewegen, und ein zweiter Teilbereich der Ventilschließfeder kann auf einer der Betätigungseinrichtung abgewandten Seite der Stelleinrichtung angeordnet sein.

Die Halteeinrichtung kann als zumindest ein Drahtbiegeteil ausgebildet sein. Die Halteeinrichtung kann aus einer Mehrzahl, beispielsweise zumindest zwei, Drahtbiegeteilen, ausgebildet sein. So kann die Feder kostengünstig hergestellt werden und nur einen geringen Bauraum einnehmen. Vorteilhaft kann die Feder einfach an den vorhandenen Bauraum angepasst werden.

Die Halteeinrichtung kann zumindest einen Seitenflügel aufweisen, der ausgebildet ist, das Lager, die Stelleinrichtung oder die Nadelrolle vertikal zu führen. Insbesondere kann der zumindest eine Seitenflügel ausgebildet sein, durch eine stirnseitige Federabstützung das Lager, die Stelleinrichtung oder die Nadelrolle vertikal zu führen. Der Seitenflügel kann vorteilhaft ausgebildet sein, eine Mehrzahl von Elementen vertikal zu führen. In einer günstigen Ausführungsform kann die Halteeinrichtung zumindest zwei Seitenflügel aufweisen.

Ferner kann die Halteeinrichtung zumindest einen Stützabschnitt aufweisen, der ausgebildet ist, das Lager zusammenzudrücken. Dabei kann eine Stützkraft von einer Halbschale oder einem Gehäuseabschnitt auf den Stützabschnitt ausgeübt wird. So kann die Halteeinrichtung ausgebildet sein, Lagerelemente des Lagers wie Lagerschalen und Nadelrolle zusammenzudrücken.

Dabei kann die Halteeinrichtung zumindest teilweise spiegelsymmetrisch ausgebildet sein. So kann ein robustes Kippankerventil geschaffen werden. So können alle Funktionen der Halteeinrichtung redundant ausgeübt werden. Ein Bruch der Halteeinrichtung kann so von dem redundanten Federabschnitt ausgeglichen werden. Vorteilhaft wird ein robustes und ausfallsicheres Kippankerventil geschaffen.

Die Halteeinrichtung kann zumindest einen Seitenflügel aufweisen, der ausgebildet ist, das Lager, die Stelleinrichtung oder die Nadelrolle vertikal zu führen. Insbesondere kann der zumindest eine Seitenflügel ausgebildet sein, durch eine stirnseitige Federabstützung das Lager, die Stelleinrichtung oder die Nadelrolle vertikal zu führen. Der Seitenflügel kann vorteilhaft ausgebildet sein, eine Mehrzahl von Elementen vertikal zu führen. In einer günstigen Ausführungsform kann die Halteeinrichtung zumindest zwei Seitenflügel aufweisen.

In einer besonderen Ausführungsform kann die Stelleinrichtung zumindest in einem Teilbereich ein statisches Magnetfeld aufweisen. So kann die Stelleinrichtung als ein Permanentmagnet oder Dauermagnet ausgebildet sein. In diesem Fall kann die Stelleinrichtung ein hartmagnetisches Material umfassen. Vorteilhaft kann neben einer durch einen Magnetfluss bedingten Anziehungskraft zusätzlich eine Abstoßung durch eine Polung des Magnetfelds erzielt werden. So kann ein schnellerer und/oder kraftvoller Wechsel zwischen der ersten Endposition und der zweiten Endposition und umgekehrt initiiert werden.

Ferner kann das Kippankerventil ein Dichtelement, das an der der Betätigungseinrichtung abgewandten Seite der Stelleinrichtung angeordnet ist, aufweisen. Auch kann das Kippankerventil eine Halbschale aufweisen, in der ein Eingang für ein Fluid und ein Ventilsitz mit einem Ausgang für ein Fluid ausgebildet sind, wobei der Ausgang in der ersten Endposition der Stelleinrichtung mittels des Dichtelements fluiddicht verschließbar ist.

Das Kippankerventil kann zusätzlich ein Dämpferelement aufweisen, das an der der Betätigereinrichtung zugewandten Seite der Stelleinrichtung angeordnet ist. Dabei kann das Dämpferelement ausgebildet sein, bei einer Bewegung der Stelleinrichtung in die zweite Endposition eine mechanische Schwingung der Stelleinrichtung, insbesondere eine Vibration und/oder eine Erschütterung und/oder einen Stoß, zu dämpfen. Das Dämpferelement kann mittig an der Stelleinrichtung angeordnet sein. So kann das Dämpferelement auf den Spulenkern wirken. Das Dämpferelement kann derart an der Stelleinrichtung angeordnet sein, dass es bei einer Bewegung der Stelleinrichtung in die zweite Endposition auf Wickeleinrichtung, die Spule, eine Stirnseite der Wickeleinrichtung oder Spule oder eine an einer Stirnseite der Betätigungseinrichtung angeordnete Lochscheibe wirkt. So kann das Dämpferelement an einem dem Lager abgewandten Ende auf einer der Betätigungseinrichtung zugewandten Hauptfläche der Stelleinrichtung angeordnet sein.

Das Dämpferelement und das Dichtelement können einstückig ausgebildet sein. So können das Dämpferelement und das Dichtelement in einem Arbeitsschritt montiert werden. Auch sind so fertigungstechnische Vorteile erzielbar, beispielsweise eine kostengünstige Produktion. Ferner können das Dämpferelement und das Dichtelement zumindest teilweise aus einem Elastomer gebildet sein. So können das Dämpferelement und das Dichtelement zumindest teilweise aus einem Gummi gebildet sein. So können vorteilhafte Dicht- und Dämpfungseigenschaften erzielt werden.

Günstig ist es auch, wenn die Halbschale magnetisch nicht leitend ist. Ferner können die weitere Halbschale und ergänzend oder alternativ der Anker magnetisch leitend sein. So kann ein von der Spule ausgehendes Magnetfeld günstig geleitet werden. Wenn die Halbschale magnetisch nicht leitend ausgeführt ist, so können ungünstige Kräfte durch eine ungewollte Magnetkraft in eine ungewollte Richtung auf die Stelleinrichtung vermieden werden.

Die Halbschale, die weitere Halbschale oder ein Gehäuseelement des Kippankerventils können zumindest teilweise Stahl aufweisen. So kann eine Vielzahl von Elementen des Kippankerventils aus einem robusten, verschleißarmen Material gefertigt sein.

Die erste Wickeleinrichtung kann eine zur zweiten Wickeleinrichtung umgekehrte Wickelrichtung um den Spulenkern aufweisen oder in gleicher Wickelrichtung angeordnet werden. Dabei können die beiden Anschlussdrähte der Spule in umgepolter Anordnung mit der Schnittstelle verbunden werden. Die beiden Wickeleinrichtungen können hierzu in Reihe oder in paralleler Anordnung mit der Schnittstelle in Verbindung stehen. So kann ein im Spulenkern in entgegengesetzte Richtungen gerichteter Magnetfluss erzeugt werden. Dabei können die beiden Wickeleinrichtungen in einer Ausführungsform gemeinsam angesteuert werden. So kann eine einfache Ansteuerung realisiert werden.

Die erste Wickeleinrichtung und die zweite Wickeleinrichtung können gemeinsam ansteuerbar und/oder von Strom durchfließbar sein. Insbesondere können die erste Wickeleinrichtung und die zweite Wickeleinrichtung jeweils ein magnetisches Feld mit entgegengesetzter Polarität erzeugen. In einer Ausführungsform können die erste Wickeleinrichtung und die zweite Wickeleinrichtung gemeinsam beziehungsweise gleichzeitig angesteuert werden und dabei ein magnetisches Feld mit entgegengesetzter Polarität erzeugen.

In einer Ausführungsform können die erste Wickeleinrichtung und die zweite Wickeleinrichtung getrennt ansteuerbar sein. So können die beiden Wickeleinrichtungen abwechselnd angesteuert werden.

Günstig ist es auch, wenn das Kippankerventil ein Innengehäuse und ein Außengehäuse aufweist. Dabei kann das Innengehäuse die zweite Wickeleinrichtung umschließen, wobei das Innengehäuse mit dem Spulenkern zwischen der ersten Wickeleinrichtung und der zweiten Wickeleinrichtung magnetisch leitend verbunden ist. Das Außengehäuse kann die erste Wickeleinrichtung, die zweite Wickeleinrichtung und das Innengehäuse umschließen, wobei das Außengehäuse an einem der Betätigungseinrichtung abgewandten ersten Ende des Spulenkerns mit dem Spulenkern verbunden ist, wobei ein erster Magnetfluss über den Spulenkern, die Betätigungseinrichtung und das Außengehäuse leitbar ist. Ein zweiter Magnetfluss kann über den Spulenkern, die Betätigungseinrichtung und das Innengehäuse leitbar sein.

Ferner kann die Stelleinrichtung beweglich zwischen einem Ende des Innengehäuses und einem Ende des Außengehäuses beweglich angeordnet sein. Das eine Ende des Innengehäuses kann einen Anschlag für die Stelleinrichtung darstellen. Das eine Ende des Außengehäuses kann einen Anschlag für die Stelleinrichtung darstellen. Der Anschlag kann durch eine Nase oder einen Vorsprung gebildet werden. Der Anschlag kann durch eine mit dem jeweiligen Gehäuse verbundene Lochscheibe gebildet werden. Auch kann der Anschlag direkt von dem jeweiligen Gehäuse gebildet werden. So kann sich die Stelleinrichtung zwischen dem Anschlag des Innengehäuses und dem Anschlag des Außengehäuses bewegen. In der ersten Endposition kann die Stelleinrichtung an dem Anschlag des Außengehäuses anliegen und in der zweiten Endposition kann die Stelleinrichtung an dem Anschlag des Innengehäuses anliegen. Bei diesem jeweiligen Anschlag kann auch ein Dämpfer- oder Ventilgummi an einem Ventilsitz anliegen. Dabei kann ein Abstand zwischen dem von dem Innengehäuse geschaffenen Anschlag und dem vom Außengehäuse geschaffenen Anschlag maximal 2 Millimeter betragen.

Es wird ein Verfahren zum Betreiben eines Kippankerventils gemäß einer Variante eines hier vorgestellten Kippankerventils vorgestellt, wobei ein Signal zum Ansteuern der Spule an eine Schnittstelle des Kippankerventils bereitgestellt wird, um eine Ventilstellung einzustellen. Durch Wahl der Polarität des Spannungssignals an der Schnittstelle kann die gewünschte Endposition gewählt werden. Auch durch diese Ausführungsvariante der Erfindung in Form eines Verfahrens kann die der Erfindung zugrunde liegende Aufgabe schnell und effizient gelöst werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Fahrzeugs mit einer Bremse gemäß einem Ausführungsbeispiel der vorliegenden Erfindung;
- Fig. 2: eine schematische Darstellung eines Kippankerventils gemäß einem Ausführungsbeispiel der vorliegenden Erfindung
- Fig. 3: eine Schaltsymbol-Darstellung eines 3/2-Wegeventils gemäß einem Ausführungsbeispiel der vorliegenden Erfindung;
- Fig. 4: eine schematische Darstellung eines bistabilen Kippankerventils gemäß einem Ausführungsbeispiel der vorliegenden Erfindung;
- Fig. 5: eine schematische Darstellung eines bistabilen Kippankerventils gemäß einem Ausführungsbeispiel der vorliegenden Erfindung;
- Fig. 6: eine schematische Querschnittsdarstellung eines Kippankerventils gemäß einem Ausführungsbeispiel der vorliegenden Erfindung;
- Fig. 7 bis Fig. 13: schematische Querschnittsdarstellungen eines Kippankerventils in unterschiedlichen Stellungen oder Zuständen gemäß einem Ausführungsbeispiel der vorliegenden Erfindung;
- Fig. 14: eine schematische Querschnittsdarstellung eines Kippankerventils gemäß einem Ausführungsbeispiel der vorliegenden Erfindung;
- Fig. 15: eine schematische Darstellung in einer Ansicht von unten eines Kippankerventils gemäß einem Ausführungsbeispiel der vorliegenden Erfindung;
- Fig. 16 bis Fig.: 19 schematische Schnittdarstellungen eines Kippankerventils gemäß einem Ausführungsbeispiel der vorliegenden Erfindung;
- Fig. 20: eine schematische Darstellung in einer Ansicht von unten eines Kippankerventils gemäß einem Ausführungsbeispiel der vorliegenden Erfindung;
- Fig. 21: eine schematische Schnittdarstellung eines Kippankerventils gemäß einem Ausführungsbeispiel der vorliegenden Erfindung; und
- Fig. 22: ein Ablaufdiagramm eines Verfahrens zum Betreiben eines Kippankerventils gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

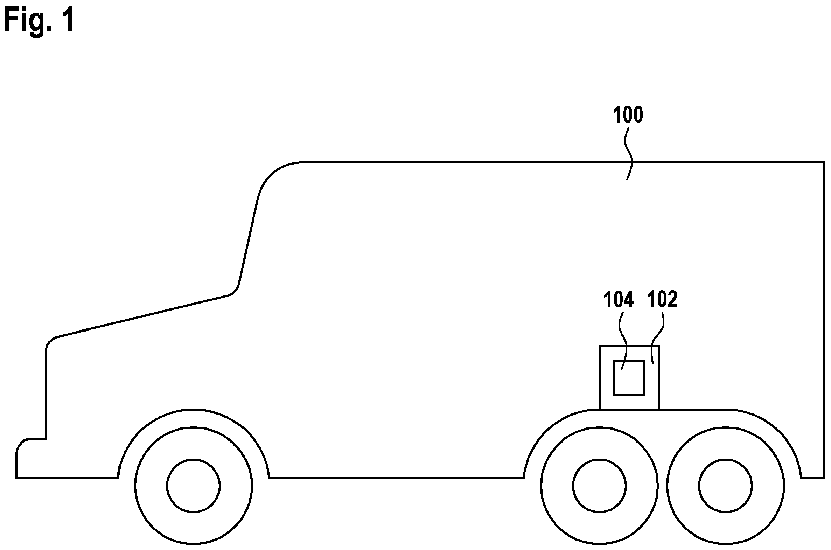

Fig. 1 zeigt eine schematische Darstellung eines Fahrzeugs 100 mit einer Bremse 102 gemäß einem Ausführungsbeispiel der vorliegenden Erfindung. Bei der Bremse 102 handelt es sich in einem günstigen Ausführungsbeispiel um eine Parkbremse 102 oder eine Feststellbremse 102. Dabei umfasst die Bremse 102 ein elektronisches, pneumatisches oder hydraulisches Bremssystem mit einem Kippankerventil 104. Entsprechende Ausführungsbeispiele des Kippankerventils 104 sind in den folgenden Figuren dargestellt und beschrieben.

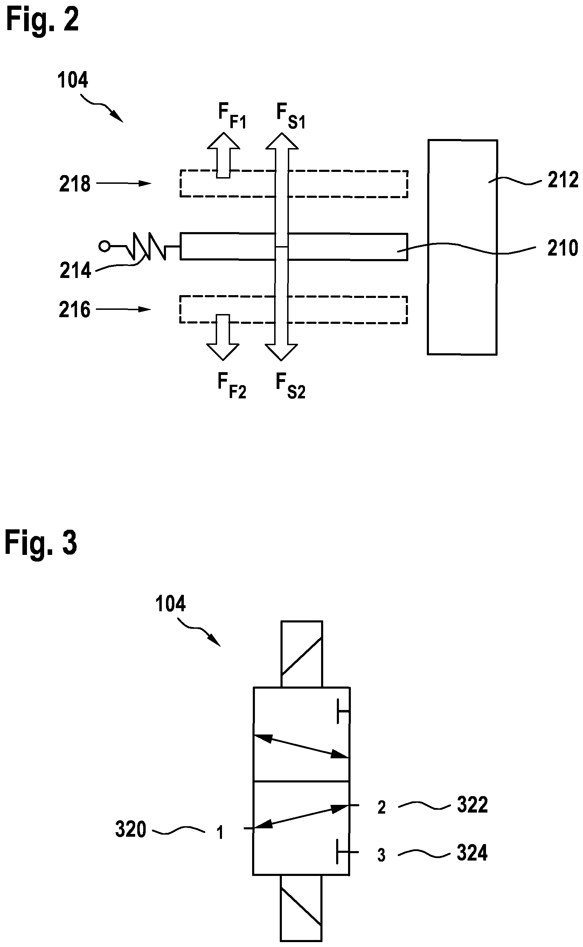

Fig. 2 zeigt eine schematische Darstellung eines Kippankerventils 104 für eine Bremse eines Fahrzeugs gemäß einem Ausführungsbeispiel der vorliegenden Erfindung. Bei dem Fahrzeug kann es sich um ein Ausführungsbeispiel eines in Fig. 1 gezeigten Fahrzeugs 100 handeln. Das Kippankerventil 104 umfasst in dem in Fig. 2 dargestellten Ausführungsbeispiel eine Stelleinrichtung 210, eine Betätigungseinrichtung 212 sowie eine Halteeinrichtung 214. Die Stelleinrichtung 210 ist zwischen einer ersten Endposition 216 und einer zweiten Endposition 218 bewegbar. Dabei ist die Stelleinrichtung 210 mit der Betätigungseinrichtung 212 wirkverbunden. So ist die Betätigungseinrichtung 212 ausgebildet, die Stelleinrichtung 210 von der ersten Endposition 216 in die zweite Endposition 218 zu bewegen sowie die Stelleinrichtung 210 von der zweiten Endposition 218 in die erste Endposition 216 zu bewegen.

Die Halteeinrichtung 214 ist mit der Stelleinrichtung 210 wirkverbunden. So ist die Halteeinrichtung 214 ausgebildet, die Stelleinrichtung 210 in der ersten Endposition 216 zu halten oder zu fixieren, wenn sich die Stelleinrichtung 210 in der ersten Endposition 216 befindet und ferner die Stelleinrichtung 210 in der zweiten Endposition 218 zu halten, wenn sich die Stelleinrichtung 210 in der zweiten Endposition 218 befindet. So ist die Halteeinrichtung 214 ausgebildet, eine entsprechende Fixierkraft F_{F} oder Haltekraft bereitzustellen. So kann es sich bei der Fixierkraft F_{F} um eine positionsabhängige Kraft handeln.

Diese Fixierkraft F_{F} aus der Halteeinrichtung 214 kann durch eine Federkraft und/oder eine permanentmagnetische Eigenschaft der Stelleinrichtung 210 zusammen mit dem Restmagnetismus der jeweils zuvor magnetisch aktiven Komponenten 640, 648 bzw. 650 der Betätigungseinrichtung 212 gebildet werden.

Die Betätigungseinrichtung 212 ist ausgebildet, eine Stellkraft F_{S} bereitzustellen, die höher als die Fixierkraft F_{F} ist. Bei der Stellkraft kann es sich um eine positionsabhängige richtungsgebundene Kraft handeln. So kann die Betätigungseinrichtung 214 ausgebildet sein eine erste Stellkraft F_{S1} bereitzustellen, die von der ersten Endposition 216 in Richtung der zweiten Endposition 218 gerichtet ist, sowie eine zweite Stellkraft F_{S2} bereitstellen, die von der zweiten Endposition 218 in Richtung der ersten Endposition 216 gerichtet ist.

In einem Ausführungsbeispiel weist die Betätigungseinrichtung 212 eine Schnittstelle 654 zum Empfangen eines Steuerungssignals auf. In diesem Fall kann die Betätigungseinrichtung 212 ausgebildet sein, die Stellkraft F_{S} ansprechend auf das Steuerungssignal der Schnittstelle 654 bereitzustellen. Die Polarität des bereitgestellten Steuerungssignals der Schnittstelle 654 bestimmt dabei mit der Wirkrichtung der Stellkraft F_{S} ob es sich um eine Kraft F_{S1} oder eine Kraft F_{S2} handelt.

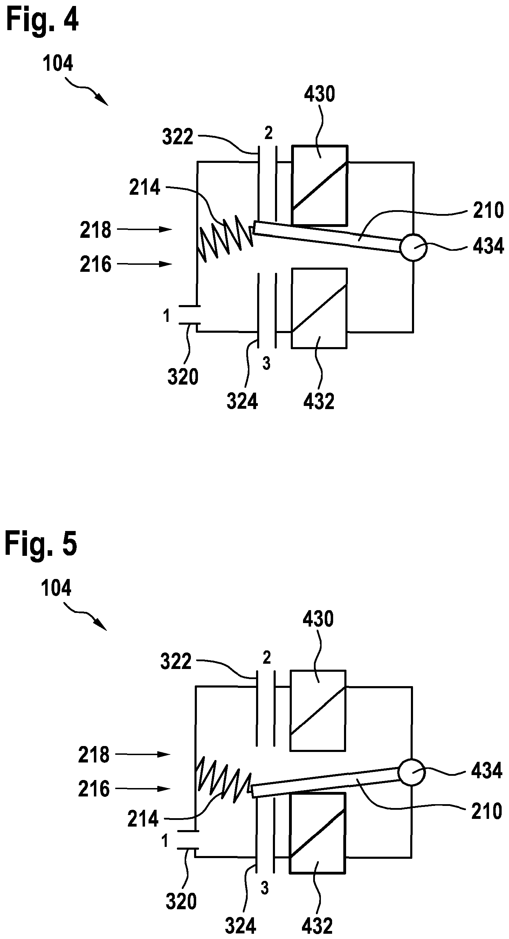

Fig. 3 zeigt eine Schaltsymbol-Darstellung eines 3/2-Wegeventils gemäß einem Ausführungsbeispiel der vorliegenden Erfindung. Das 3/2-Wegeventil weist drei Anschlüsse 320, 322, 324 und zwei Schaltstellungen auf. Bei dem ersten Anschluss 320 handelt es sich um einen Anschluss für eine Druckquelle. Bei dem zweiten Anschluss 322 handelt es sich um einen Arbeitsleistungsanschluss. Der dritte Anschluss 324 ist als Entlüftungsanschluss beziehungsweise Abfluss konzipiert. Entsprechend der üblichen Anschlussbezeichnungen ist in Fig. 3 die Druckquelle 320 beziehungsweise der erste Anschluss 320 zusätzlich mit der 1, der Arbeitsleistungsanschluss 322 beziehungsweise der zweite Anschluss 322 mit der 2 und der Entlüftungsanschluss 324 beziehungsweise der dritte Anschluss 324 mit der 3 bezeichnet. In den folgenden zwei Figuren Fig. 4 und Fig. 5 ist ein vergleichbares 3/2-Wegeventil gemäß einem Ausführungsbeispiel der vorliegenden Erfindung in einer abstrahierten Darstellung beschrieben.

Fig. 4 zeigt eine abstrahierte Darstellung eines bistabilen Kippankerventils 104 gemäß einem Ausführungsbeispiel der vorliegenden Erfindung. Das Kippankerventil 104 weist eine erste Spule 430, eine zweite Spule 432, eine durch die Spulen 430, 432 bewegbare Stelleinrichtung 210, welche in einem Lager 434 gelagert ist, sowie eine Halteeinrichtung 214 auf. Der Stelleinrichtung 210 ist zwischen einer ersten Endposition 216 und einer zweiten Endposition 218 bewegbar. Das Kippankerventil 104 weist drei Anschlüsse 320, 322, 324 auf. In einem Ausführungsbeispiel handelt es sich bei dem ersten Anschluss 320 um einen Eingang und bei dem zweiten Anschluss 322 und dem dritten Anschluss 324 jeweils um einen Ausgang. Der Stelleinrichtung 210 ist ausgebildet, in der ersten Endposition 216 den zweiten Anschluss 322 und in der zweiten Endposition 218 den dritten Anschluss 324 fluiddicht zu verschließen. So handelt es sich bei dem dargestellten Ausführungsbeispiel um ein Umschaltventil oder 3/2-Wegeventil. Durch einfache Konfigurationsänderungen kann einfach ein Schließer oder ein Öffner geschaffen werden.

In einem alternativen Ausführungsbeispiel handelt es sich bei dem zweiten Anschluss 322 und dem dritten Anschluss 324 jeweils um Eingänge und bei dem ersten Anschluss 320 um einen Ausgang. In optionalen Ausführungsbeispielen weist das Kippankerventil 104 entweder den zweiten Anschluss 322 oder den dritten Anschluss 324 auf.

Vorteilhaft werden zwei stabile Zustände des Ventils 104 sichergestellt, beispielsweise in einem ersten Zustand eine eingelegte Parkbremse und in einem zweiten Zustand eine Fahrstellung. Die beiden Zustände bleiben auch bei Ausfall der elektrischen Versorgungsspannung erhalten. So wird weder die Parkbremse unbeabsichtigt im geparkten Zustand gelöst, noch wird in Fahrtstellung während der Fahrt die Parkbremse unbeabsichtigt eingelegt.

Der beschriebene Ansatz schafft ein robustes und kostengünstiges bistabiles Ventil mit einer hohen Dauerhaltbarkeit, welches mit geringem Aufwand implementierbar ist. In einem Ansatz wird die Bi-Stabilität mithilfe einer kippenden Feder sichergestellt. In dem in Fig. 4 dargestellten Ausführungsbeispiel ist die Feder 214 so angeordnet, dass sie in der Mittelstellung der als Anker ausgebildeten Stelleinrichtung 210 am stärksten gespannt ist und in beide Betätigungsrichtungen entspannt wird und somit die Stelleinrichtung in beiden Endstellungen 216, 218 festhält. Vorteilhaft ergibt sich ein einfaches und robustes Design mit geringen bis keinen Mehrkosten gegenüber Standardventilen mit dem Vorteil eines geringen Verschleißes bedingt durch wenig Reibung.

In dem in Fig. 4 gezeigten Ausführungsbeispiel steht die Halteeinrichtung 214 senkrecht auf einer als Kippanker ausgebildeten Stelleinrichtung 210 und drückt somit den Kippanker 210 in seine Endpositionen 218. In dieser Kombination ergibt sich so eine sehr robuste und dauerhaltbare Lösung, die zugleich noch sehr kostengünstig herstellbar ist.

Fig. 5 zeigt eine schematische Darstellung eines bistabilen Kippankerventils 104 gemäß einem Ausführungsbeispiel der vorliegenden Erfindung. Die Darstellung des Kippankerventils 104 in Fig. 5 entspricht der Darstellung in Fig. 4, mit dem Unterschied, dass die Stelleinrichtung 210 in der zweiten Endposition 216 angeordnet ist.

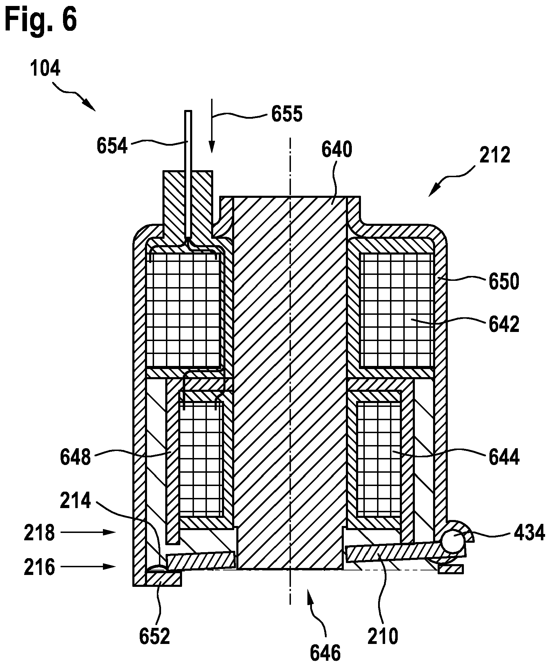

Fig. 6 zeigt eine schematische Querschnittsdarstellung eines Kippankerventils 104 gemäß einem Ausführungsbeispiel der vorliegenden Erfindung. Bei dem Kippankerventil 104 kann es sich um ein Ausführungsbeispiel eines in den vorangegangenen Figuren gezeigten Kippankerventils 104 handeln. So weist das Kippankerventil 104 eine Stelleinrichtung 210, eine Betätigungseinrichtung 212 sowie eine Halteeinrichtung 214 auf. Dabei ist die Stelleinrichtung 210 an einer Stirnseite der Stelleinrichtung 210 mittels eines Lagers 434 gelagert. Die Betätigungseinrichtung 212 ist auf einer Seite der Stelleinrichtung 210 angeordnet. Dabei umfasst die Betätigungseinrichtung 212 zumindest einen Spulenkern 640, um den eine erste Wickeleinrichtung 642 und eine zweite Wickeleinrichtung 644 angeordnet sind. Dabei ist der Spulenkern 640 im Wesentlichen quer zur Stelleinrichtung 210 ausgerichtet. Die Stelleinrichtung 210 weist eine Öffnung 646 auf. Dabei führt der Spulenkern 640 durch die Öffnung 646 der Stelleinrichtung 210. Dabei handelt es sich in einem Ausführungsbeispiel bei der Öffnung 646 um einen ovalen Durchbruch, sodass eine Kippbewegung der Stelleinrichtung 210 mechanisch ungehindert ist beziehungsweise nicht blockiert wird.

Weiterhin weist das Kippankerventil 104 ein Innengehäuse 648 sowie ein Außengehäuse 650 auf. Das Innengehäuse 648 umschließt die zweite Wickeleinrichtung 644. Dabei ist das Gehäuse 648 mit dem Spulenkern 640 zwischen der ersten Wickeleinrichtung 642 und der zweiten Wickeleinrichtung 644 verbunden. Das Gehäuse 648 kann auch aus zwei Teilen in Form einer Lochscheibe und einem Rohr bestehen. Die Lochscheibe kann bereits in den Spulenträger miteingespritzt werden, so dass der Spulenträger der Spulen 642 und 644 als einheitliches Spritzgussteil herstellbar ist. Die beiden Spulen können dann gemeinsam gewickelt werden. Anschließend kann das Rohr darübergeschoben werden. Das Außengehäuse 650 umschließt die erste Wickeleinrichtung 642, die zweite Wickeleinrichtung 644 sowie das Innengehäuse 648. Dabei ist das Außengehäuse 650 mit dem Spulenkern 640 verbunden. Hierzu liegt das Außengehäuse 650 auf einer zur Stelleinrichtung 210 abgewandten Seite beziehungsweise einer zum Innengehäuse 648 oder der zweiten Wickeleinrichtung 644 abgewandten Seite der ersten Wickeleinrichtung 642 an dem Spulenkern 640 an. Die genannte Verbindung zwischen dem Außengehäuse 650 und dem Spulenkern 640 ist an einem der Stelleinrichtung 210 abgewandten Ende des Spulenkerns 640 angeordnet.

Sowohl das Innengehäuse 648 als auch das Außengehäuse 650 sind wie der Spulenkern 640 aus einem magnetisch leitfähigen Material. So sind das Innengehäuse 648, das Außengehäuse 650 sowie der Spulenkern 640 ausgebildet, einen Magnetfluss zu leiten. Dabei ist ein zumindest von der ersten Wickeleinrichtung 642 ausgehender erster Magnetfluss über den Spulenkern 640, die Stelleinrichtung 210 sowie das Außengehäuse 650 leitbar. Ein zweiter Magnetfluss, von der zweiten Wickeleinrichtung 644 ausgehend, ist über den Spulenkern 640, die Stelleinrichtung 210 sowie das Innengehäuse 648 leitbar. Dabei ist zwischen dem jeweiligen Gehäuse 648, 650 und der Stelleinrichtung 210 je nach Position der Stelleinrichtung 210 ein Luftspalt zu überbrücken, wobei eine magnetische Anziehungskraft entstehen kann, um den Luftspalt zu verringern.

Zwischen einem dem Lager 434 abgewandten Ende der Stelleinrichtung 210 und dem Außengehäuse 650 ist die beispielsweise in Fig. 2 beschriebene Halteeinrichtung 214 angeordnet. Die Halteeinrichtung 214 ist ausgebildet, eine auf die Stelleinrichtung 210 wirkende Fixierungskraft bereitzustellen, wenn sich die Stelleinrichtung 210 in der ersten Endposition oder der zweiten Endposition befindet. Dabei handelt es sich in einem Ausführungsbeispiel um eine senkrecht auf der Stelleinrichtung 210 stehende Feder 214, die die Stelleinrichtung 210 in die jeweilige Endposition 216, 218 drückt. So kann es sich bei der Feder 214 um eine kippende Feder 214 handeln, die so angeordnet ist, dass sie in einer Mittelstellung der Stelleinrichtung 210 am stärksten gespannt ist, und in die beiden Betätigungsrichtungen entspannt wird, und somit die Betätigungseinrichtung 210 in den jeweiligen Endpositionen 216, 218 fixiert wird.

In dem in Fig. 6 gezeigten Ausführungsbeispiel ist das dem Lager 434 abgewandte Ende der Stelleinrichtung 210 zwischen einem Ende des Innengehäuses 648 und einem Ende des Außengehäuses 650 beweglich angeordnet. Hierzu ist zumindest an dem Außengehäuse 650 ein Anschlag 652 ausgebildet. Da es sich bei dem gezeigten Ausführungsbeispiel bei dem Außengehäuse 650 um einen zylindrischen Körper handelt, ist der Anschlag 652 einfach durch eine mit dem Außengehäuse 650 verbundene Lochscheibe realisierbar.

In einem optionalen Ausführungsbeispiel weist das Kippankerventil 104 eine Schnittstelle 654 zum Einlesen eines Steuersignals 655 beziehungsweise allgemein eines Signals 655 auf. Dabei ist die Schnittstelle 654 mit der ersten Wickeleinrichtung 642 sowie der zweiten Wickeleinrichtung 644 verbunden. In einem Ausführungsbeispiel handelt es sich bei der Schnittstelle 654 um eine zweipolige Schnittstelle 654. In einem alternativen Ausführungsbeispiel handelt es sich bei der Schnittstelle 654 um eine dreipolige Schnittstelle 654. Dabei ist es günstig, wenn bei einer zweipoligen Ausführung der Schnittstelle 654 die erste Wickeleinrichtung 642 eine zur zweiten Wickeleinrichtung 644 umgekehrte Wickelrichtung aufweist. Bei einer dreipoligen Ausführung der Schnittstelle 654 können vorteilhaft die erste Wickeleinrichtung 642 und die zweite Wickeleinrichtung 644 getrennt voneinander angesteuert werden. Selbstverständlich ist auch eine Mischform möglich, sodass die erste Wickeleinrichtung 642 und die zweite Wickeleinrichtung 644 eine umgekehrte Wickelrichtung aufweisen und gleichzeitig die erste Wickeleinrichtung 642 und die zweite Wickeleinrichtung 644 getrennt voneinander ansteuerbar sind. Je nach Status des Steuersignals 655 wird die Betätigungseinrichtung 212, beziehungsweise die erste Wickeleinrichtung 642 und/oder die zweite Wickeleinrichtung 644 stromlos oder bestromt geschaltet.

Durch eine Anordnung runder Wickeleinrichtungen 642, 644 in weitgehend runden Gehäusen 648, 650 erfolgt eine Magnetkreisoptimierung durch ein weitgehend homogen verteiltes Magnetfeld. So folgt die Anordnung der Wickeleinrichtungen 642, 644 in den Gehäusen 648, 650 zusammen mit der Stelleinrichtung 210 einem Topf-Deckel-Prinzip und führt zu einer Spulen- und Kostenminimierung. Wie in den folgenden Figuren ersichtlich, kann mit dem hier vorgestellten Grundprinzip ein Kippankerventil 104 als ein Schließer beziehungsweise ein Ein-/Auslassventil oder alternativ als ein Öffner beispielsweise für eine Backupanwendung oder als ein Wechsler für einen universellen Einsatz realisiert werden.

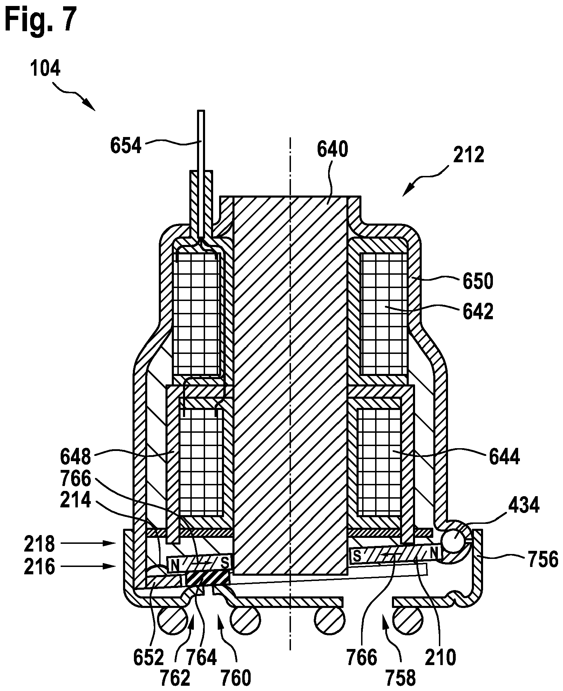

Fig. 7 bis Fig. 13 zeigen jeweils eine schematische Querschnittsdarstellung eines Kippankerventils 104 in unterschiedlichen Stellungen oder Zuständen gemäß Ausführungsbeispielen der vorliegenden Erfindung. Die Darstellung des Kippankerventils 104 in den Figuren Fig. 7 bis Fig. 13 weist eine Ähnlichkeit zu dem in Fig. 6 beschriebenen Kippankerventil 104 auf. Im Unterschied zu Fig. 6 sind die erste Wickeleinrichtung 642 und die zweite Wickeleinrichtung 644 gleich groß, weshalb das Außengehäuse 650 im Bereich der ersten Wickeleinrichtung 642 einen geringeren Durchmesser als im Bereich der zweiten Wickeleinrichtung 644 beziehungsweise des die zweite Wickeleinrichtung 644 umschließenden Innengehäuses 648 aufweist. Weiterhin weist das Kippankerventil 104 eine Halbschale 756 auf, in der sich die Stelleinrichtung 210 bewegt. Dabei ist die Halbschale 756, die vorzugsweise zumindest überwiegend ein magnetisch nicht-leitendes Material aufweist, mit dem Außengehäuse 650 verbunden. Eine derartige Verbindung zwischen dem Außengehäuse 650 und der Halbschale 756 kann beispielsweise mittels Laserschweißen erzeugt werden. Vorteilhaft handelt es sich bei der Verbindung zwischen der Halbschale 756 und dem Gehäuse 650 um eine fluiddichte Verbindung.

In den gezeigten Ausführungsbeispielen ist in der Halbschale 756 ein Eingang 758 und in einem Ventilsitz 760 ein Ausgang 762 ausgebildet. An der Stelleinrichtung 210 ist ein Dichtelement 764 angeordnet. Das Dichtelement 764 ist auf der der Betätigungseinrichtung 212 abgewandten Seite der Stelleinrichtung 210 angeordnet. In einem Ausführungsbeispiel ist das Dichtelement 764 aus einem Elastomer wie beispielsweise Gummi gefertigt.

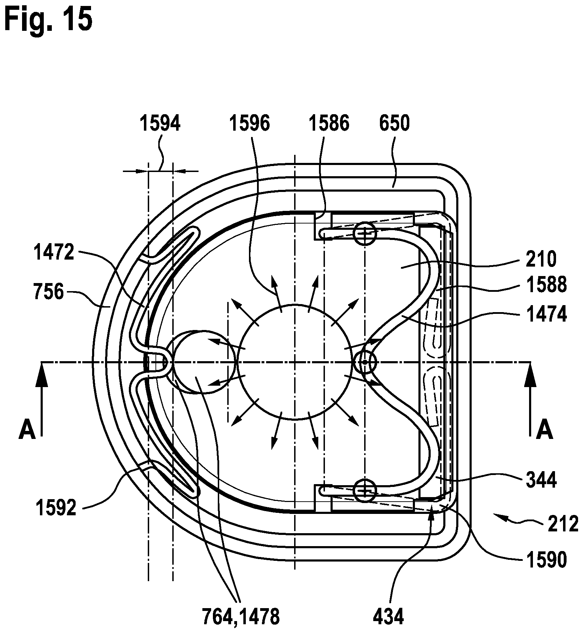

Im Unterschied zu dem in Fig. 6 gezeigten Ausführungsbeispiel weist die Stelleinrichtung 210 zumindest in einem Teilbereich ein statisches Magnetfeld 766 auf. In dem gezeigten Ausführungsbeispiel erstreckt sich ein erstes statisches Magnetfeld 766 von dem Lager 434 hin zur Öffnung 646, wobei im Lager 434 ein Nordpol und an einem zur Öffnung 646 weisenden Bereich ein Südpol ausgebildet ist. Dieser Südpol umschließt sich radial um die Öffnung 646 der Stelleinrichtung 210, während sich der Nordpol radial umlaufend an der äußeren Randzone des Stellgliedes 210 befindet (siehe auch Fig. 15, 1596).

Die Ausführungsbeispiele in Fig. 7 bis Fig. 13 zeigen ein Kippankerventil 104 mit einer seitlichen Ankerlagerung in Anlehnung an ein Grundprinzip elektrischer Relais. Die Wickeleinrichtungen 642, 644 stellen zwei Magnetspulen dar, die auf einem gemeinsamen Spulenträger um den gemeinsamen Spulenkern 640 angeordnet sind und ein Umschalten des Kippankerventils 104 steuern. Mittels einer beispielsweise als Schnappfeder ausgebildeten Halteeinrichtung 214 werden beide Endstellungen 216, 218 stromlos fixiert. In einem Ausführungsbeispiel sorgt eine als dauermagnetischer Anker 210 ausgebildete Stelleinrichtung 210 für eine Verstärkung der Schalt- und Haltekraft beziehungsweise Stellkraft und Fixierkraft in der jeweiligen Schaltstellung. Ein im magnetischen Stahl der Teile 210, 640, 648 und 650 verbleibender Restmagnetismus sorgt auch nach Wegnahme des Ansteuersignals 655 weiterhin für eine erhöhte Haltekraft in der jeweiligen Endposition 216 oder 218.

In einem Ausführungsbeispiel sind die Wickeleinrichtungen 642, 644 auf einem Spulenträger angeordnet. Dabei sind optional eine Mehrzahl der Elemente oder Bauteile des Kippankerventils 104 (mit Ausnahme des Spulenträgers) aus Stahl und damit hochtemperaturfest bei einer hohen Oberflächengüte. In dem in Fig. 7 bis Fig. 13 gezeigten Ausführungsbeispiel dient als Ankerlagerung eine Nadelrolle, wie diese in klassischen Nadellagern verwendet wird. Die Halteeinrichtung 214 aus Formbiegedraht fixiert die Stelleinrichtung 210 und erzeugt eine Ventilschließkraft. Die Halteeinrichtung 214 übernimmt weiterhin eine Funktion einer Schnappfeder. Dabei kann die Halteeinrichtung 214 aus zwei separaten Drahtbiegeteilen bestehen. Sowohl die Gehäuse 648, 650 als auch die Halbschale 756 sowie die Stelleinrichtung 210 sind Stanz- beziehungsweise Tiefziehbleche. Einzelteile des Kippankerventils 104 sind durch Laserschweißungen verbunden, wobei ein Spulenraum gegenüber einem Ventilraum abgedichtet wird.

Die Anordnung und Ausgestaltung der Bauteile des Kippankerventils 104 schafft eine Magnetkreisoptimierung durch ein weitgehend homogen verteiltes Magnetfeld. Dies führt vorteilhaft zu einer Spulenminimierung. Die beiden mechanischen Endlagepunkte beziehungsweise Endpositionen 216, 218 werden mittels Federkraft und/oder Magnetkraft auch stromlos gehalten. So werden beide in Ruhelage mittels Federkraft und falls z.B. wegen benötigter erhöhter Schüttelfestigkeit zusätzlich durch eine magnetische Anziehung gehalten. Ein Restmagnetismus im Stahl unterstützt eine Ruhehaltekraft.

In dem gezeigten Ausführungsbeispiel sind die als Spulenkörper ausgebildeten Wickeleinrichtungen 642, 644 nebeneinander angeordnet. Dabei sind die beiden Wickeleinrichtungen 642, 644 mit der Schnittstelle 654 verbunden, die einen gemeinsamen elektrischen Anschluss darstellt.

In Fig. 7 sind die Wickeleinrichtungen 642, 644 in einem unbestromten Zustand. Die Stelleinrichtung 210 ist in der ersten Endposition 218 angeordnet. So verschließt das Dichtelement 764 den Ausgang 762.

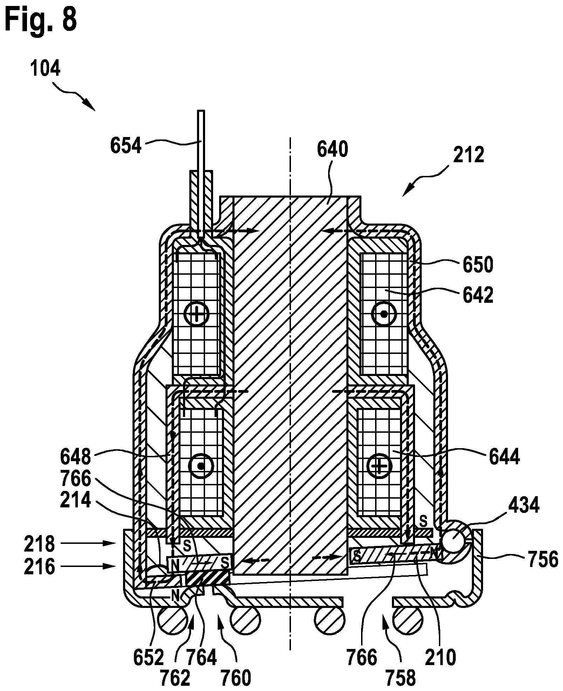

Fig. 8 zeigt das in Fig. 7 dargestellte Kippankerventil 104 in einem ersten bestromten Zustand. Dabei weisen die erste Wickeleinrichtung 642 und die zweite Wickeleinrichtung 644 eine umgekehrte Stromrichtung auf. Der Magnetfluss bewirkt, dass an dem Anschlag 652 des Außengehäuses ein Nordpol entsteht und an dem, einen Anschlag für die Stelleinrichtung darstellenden, Ende des Innengehäuses ein Südpol entsteht. Durch entsprechende abstoßende beziehungsweise anziehende Magnetkräfte wird die Stelleinrichtung 210 von der ersten Endposition 216 in die zweite Endposition 218 gedrückt oder bewegt.

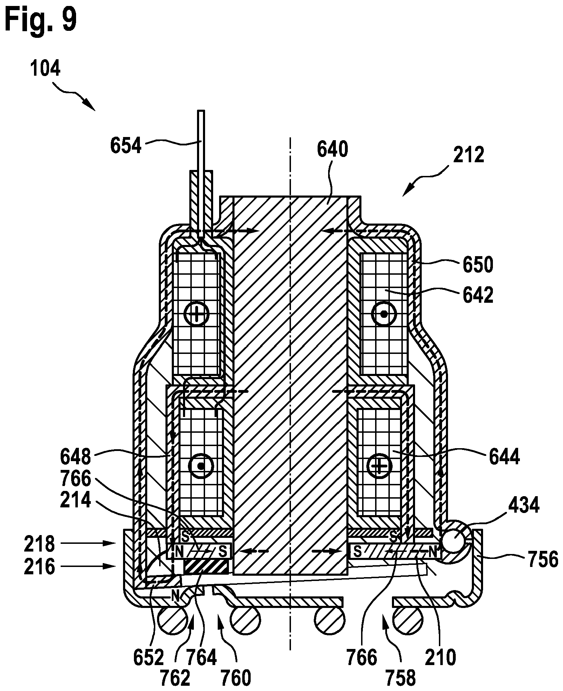

Fig. 9 zeigt das in Fig. 8 dargestellte Kippankerventil 104 in dem ersten bestromten Zustand. Im Unterschied zu Fig. 7 ist nun die Stelleinrichtung 210 in der zweiten Endposition 218 dargestellt. Die Halteeinrichtung 214 ist ausgebildet, die Stelleinrichtung 210 in der zweiten Endposition 218 zu halten. Die von der Betätigungseinrichtung 212 ausgehende Stellkraft wirkt in die gleiche Richtung wie die von der Halteeinrichtung 214 ausgehende Fixierkraft. So wird die Stelleinrichtung 210 sowohl von der Halteeinrichtung 214 als auch der Betätigungseinrichtung 212 in der zweiten Endposition 218 gehalten.

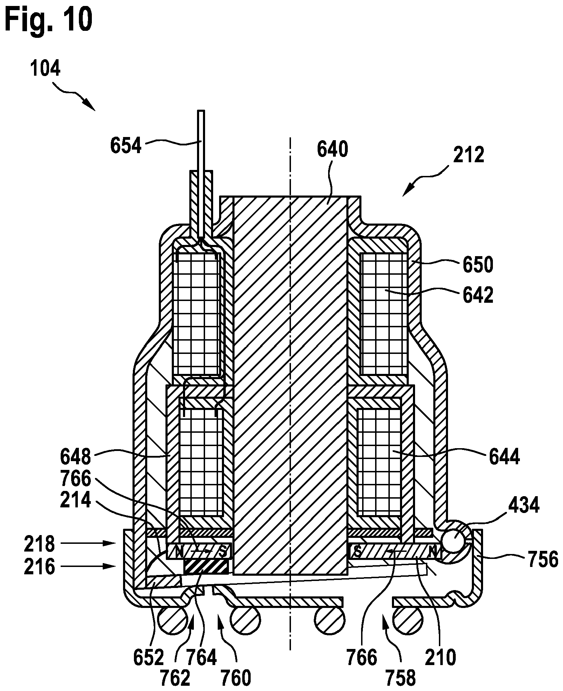

Fig. 10 zeigt das in Fig. 9 dargestellte Kippankerventil in einem unbestromten Zustand. Die Stelleinrichtung 210 wird von der Halteeinrichtung 214 in der zweiten Endposition 218 gehalten. Von der Betätigungseinrichtung 212 gehen keine Stellkräfte aus.

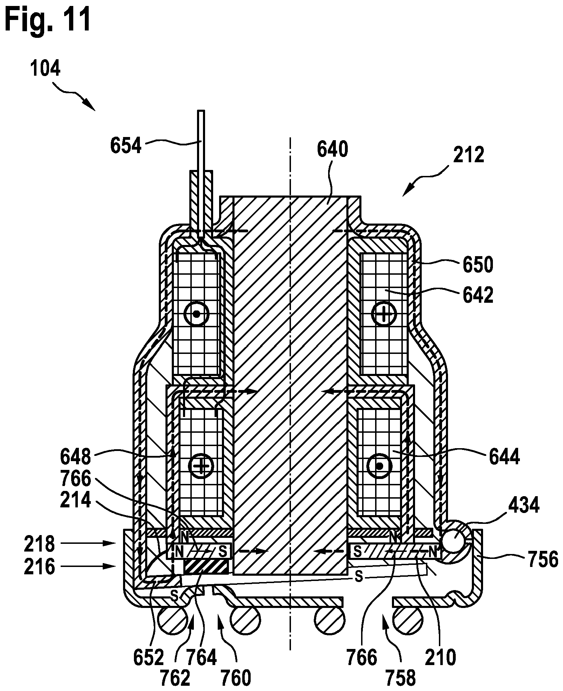

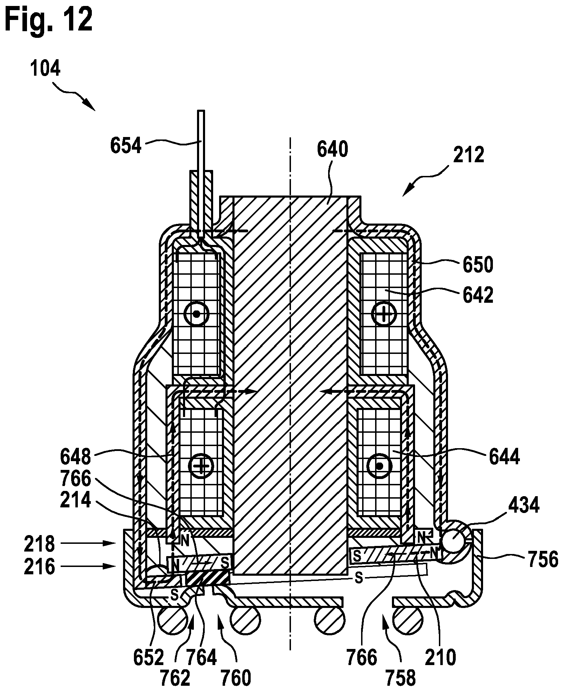

Fig. 11 zeigt das in Fig. 10 dargestellte Kippankerventil in einem zweiten bestromten Zustand. Dabei unterscheidet sich die Stromrichtung in der ersten Wickeleinrichtung 642 und der zweiten Wickeleinrichtung 644 von der in den Figuren Fig. 8 und Fig. 9 dargestellten Stromrichtung in den beiden Wickeleinrichtungen 642, 644 des Kippankerventils 104 in einem ersten bestromten Zustand. Die von der Betätigungseinrichtung 212 ausgehende Stellkraft wirkt in die entgegengesetzte Richtung wie die von der Halteeinrichtung 214 ausgehende Fixierkraft oder Haltekraft. Dabei ist die Stellkraft größer der Haltekraft, sodass sich die Stelleinrichtung in Richtung der ersten Endposition 216 bewegt und den in Fig. 12 dargestellten Zustand einnimmt.

Fig. 12 zeigt das in Fig. 11 dargestellte Kippankerventil in dem zweiten bestromten Zustand, wobei die Stelleinrichtung 210 die erste Endposition 216 eingenommen hat. Die Haltekraft und die Stellkraft wirken in dieselbe Richtung und fixieren die Stelleinrichtung 210 in der ersten Endposition 216.

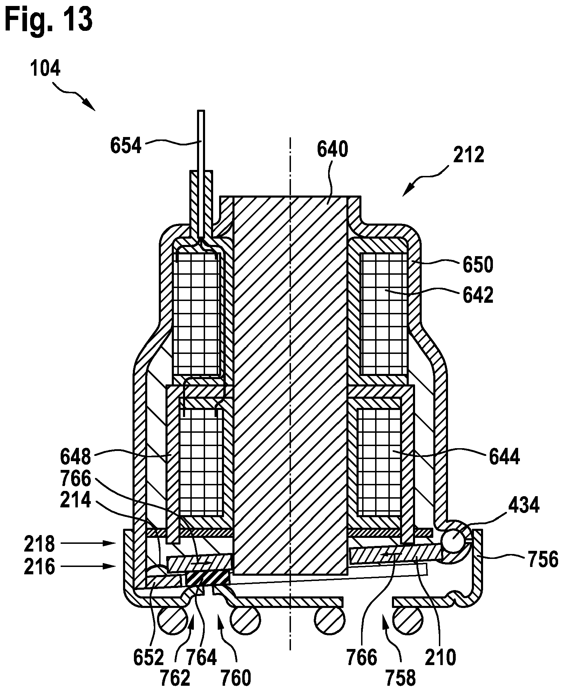

Fig. 13 zeigt das in Fig. 12 gezeigte Kippankerventil 104 in einem unbestromten Zustand. Die Stelleinrichtung 210 wird von der Halteeinrichtung 214 in der ersten Endposition 216 gehalten. Von der Betätigungseinrichtung 212 gehen keine Stellkräfte aus.

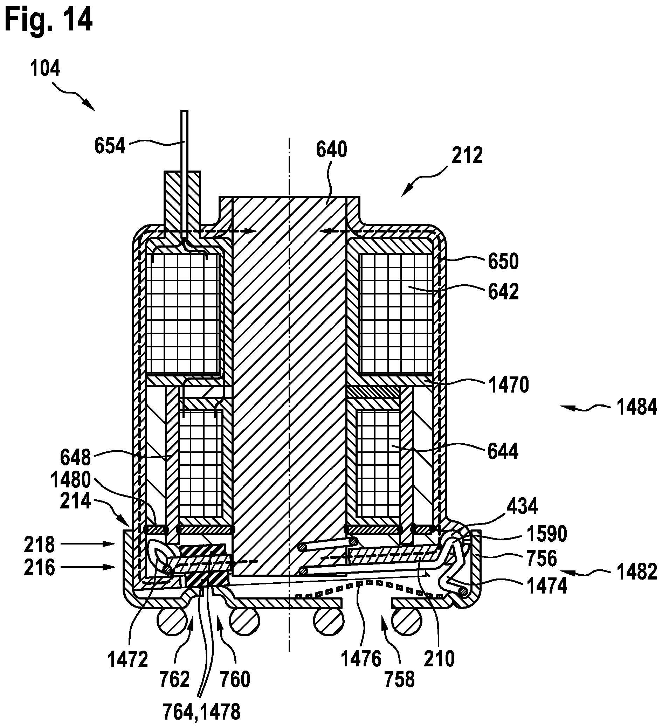

Fig. 14 zeigt eine schematische Querschnittsdarstellung eines Kippankerventils 104 gemäß einem Ausführungsbeispiel der vorliegenden Erfindung. Bei dem Kippankerventil kann es sich um ein Ausführungsbeispiel eines in den vorangegangenen Figuren gezeigten Kippankerventils 104 handeln. Dabei weist das in Fig. 14 gezeigte Kippankerventil 104 sowohl Ähnlichkeiten zu dem in Fig. 6 als auch zu dem in Fig. 7 bis Fig. 13 gezeigten Kippankerventil 104 auf. Die Betätigungseinrichtung 212 weist einen Spulenkern 640 auf, um den eine erste Wickeleinrichtung 642 und eine zweite Wickeleinrichtung 644 angeordnet sind. Die erste Wickeleinrichtung 642 und die zweite Wickeleinrichtung 644 weisen einen gemeinsamen Spulenkörper 1470 auf. Dabei weist die erste Wickeleinrichtung 642 einen größeren Querschnitt auf, als die zweite Wickeleinrichtung 644. Die Bauhöhe der Spule 642 kann gegebenenfalls soweit verkürzt werden, sodass deren Magnetkraft identisch ist mit der Magnetkraft von Spule 644. Das Außengehäuse 650 weist einen gleichbleibenden Durchmesser auf. Die Halteeinrichtung 214 umfasst eine Schnappfeder 1472 zum Fixieren der Stelleinrichtung und eine Ventilschließfeder 1474 zum Bewegen der Stelleinrichtung. Dabei ist die Schnappfeder 1472 ausgebildet, die Stelleinrichtung 210 in der zweiten Endposition 218 zu halten. Ein erster Teilbereich der Ventilschließfeder 1474 ist auf einer der Betätigungseinrichtung 212 zugewandten Seite der Stelleinrichtung 210 angeordnet und übt eine Kraft auf die Stelleinrichtung 210 aus, um die Stelleinrichtung 210 in Richtung der ersten Endposition 216 zu bewegen. Ein zweiter Teilbereich der Ventilschließfeder 1474 auf einer der Betätigungseinrichtung 212 abgewandten Seite der Stelleinrichtung 210 angeordnet ist, wobei die Ventilschließfeder 1474 ausgebildet ist, eine Schließkraft in eine von der Betätigungseinrichtung 212 wegführende Richtung auf die Stelleinrichtung 210 auszuüben, insbesondere wenn die Stelleinrichtung 210 in der ersten Endposition 216 angeordnet ist. So kann die Stelleinrichtung 210 bei deaktivierter Betätigungseinrichtung 212 in der ersten Endposition 216 gehalten werden. In dem hier dargestellten Ausführungsbeispiel handelt es sich bei der Schnappfeder 1472 und der Ventilschließfeder 1474 jeweils um ein Drahtbiegeelement.

Das Außengehäuse 650 ist wie bei dem in Fig. 7 bis Fig. 13 beschriebenen Ausführungsbeispiel fluiddicht mit einer Halbschale 756 verbunden, bei der ein Eingang 758 und in einem Ventilsitz 760 ein Ausgang 762 ausgebildet ist. Dabei ist an dem Eingang 758 ein Feinsieb 1476 angeordnet. Beispielsweise ist das Feinsieb 1476 mit der Halbschale 756 über ein Verfahren unter Verwendung einer Widerstandsschweißung miteinander verbunden.

An der Stelleinrichtung 210 ist ein Dichtelement 764 sowie ein Dämpferelement 1478 angeordnet. Das Dichtelement 764 ist auf der der Betätigungseinrichtung 212 abgewandten Seite der Stelleinrichtung 210 angeordnet. Ferner ist das Dämpferelement 1478 auf der der Betätigungseinrichtung 212 zugewandten Seite der Stelleinrichtung 210 angeordnet. Dabei sind in dem dargestellten Ausführungsbeispiel das Dichtelement 764 sowie das Dämpferelement 1478 einstückig ausgeformt. Sowohl das Dichtelement 764 als auch das Dämpferelement 1478 sind in einem Ausführungsbeispiel aus einem Elastomer wie beispielsweise Gummi gefertigt.

Die Stelleinrichtung 210 ist in einer ersten Endposition 216 dargestellt. In der ersten Endposition 216 ist das Dichtelement 764 der Art zum Ventilsitz 760 angeordnet, dass dieser fluiddicht verschlossen ist. Dabei weist in dem dargestellten Ausführungsbeispiel die Stelleinrichtung 210 einen Winkel von 2° zur Halbschale 756 oder zur Stirnseite des Spulenkerns 640 auf. Eine Oberfläche des Ventilsitzes 760, an der das Dichtelement 764 anliegt, wenn die Stelleinrichtung in der ersten Endposition 216 angeordnet ist, weist einen Winkel von 2° zur Haupterstreckungsebene der Halbschale 756 auf.

Die Ventilschließfeder 1474 weist in dem gezeigten Ausführungsbeispiel zwei Seitenflügel auf. Die Seitenflügel sind ausgebildet, das Lager 434 und die Stelleinrichtung 210 vertikal zu führen. Die vertikale Führung des Lagers 434 und der Stelleinrichtung 210 wird durch eine stirnseitige Federabstützung der Seitenflügel erzielt. Weiterhin weist die Ventilschließfeder 1474 zwei Stützabschnitte auf. Die Stützabschnitte sind ausgebildet, das Lager 434 zusammenzudrücken. Dabei wird eine Stützkraft von der Halbschale 756 auf den Stützabschnitt ausgeübt.

An einem der Stelleinrichtung 210 zugewandten Ende der Betätigungseinrichtung 212 ist radial um den Spulenkern 640 eine Lochscheibe 1480 angeordnet. Die Lochscheibe 1480 ist per Laserschweißen fluiddicht mit dem Außengehäuse 650, dem Innengehäuse 648 sowie dem Spulenkern 640 verbunden und schafft so einen Ventilraum 1482 und einen Spulenraum 1484, die fluiddicht voneinander getrennt sind. Hierzu ist die Lochscheibe 1480 magnetisch nicht-leitend ausgeführt. An Stelle einer Lochscheibe kann im äußeren Hohlraum auch ein Gummiring zur fluiddichten Absperrung zwischen Außengehäuse 650 und Innengehäuse 648 verwendet werden. Die Lochscheibe 1480 zwischen Innengehäuse 648 und Kern 640 bildet einen Anschlag für das Dämpferelement 1478.

Das hier dargestellte Kippankerventil 104 schafft eine preisgünstige Gesamtlösung durch eine optimale Magnetkraft-Ausnutzung bei einer minimalen Spulen- und Gehäusegröße. Das robuste Grundkonzept zeichnet sich durch eine hohe Schüttelfestigkeit durch die Halbschalenlagerung sowie die möglichen hohen Schaltzahlen aus. Die hohen Schaltzahlen werden beispielsweise durch die große Lager-Berührfläche bei einem geringen zurückzulegenden Weg der Stelleinrichtung 210 geschaffen.

In einem Ausführungsbeispiel ist die Halteeinrichtung 214 spiegelsymmetrisch ausgeformt. So weist die Halteeinrichtung 214 eine symmetrische Federkontur auf. Hierdurch kann vorteilhaft eine hohe Funktionssicherheit durch redundante Federung erzielt werden. Das hier beschriebene Kippankerventil 104 zeichnet sich durch eine einfache Montage, eine geringe bewegte Ankermasse, eine reibungsarme Ankeraufhängung sowie eine verschleißarme Ankerlagerung aus. Wie in nachfolgenden Figuren noch näher ausgeführt, wird durch die Kombination eines Nadellagers und einer als Formfeder ausgebildeten Halteeinrichtung 214 eine präzise Ankerführung erzielt. Sowohl der Ankerhub als auch der Ventilsitz 760 sind einfach adaptierbar. Die als Drahtbiegeteil ausgeführte Halteeinrichtung 214 stellt sowohl eine Ventilschließkraft bereit als auch eine Führung zur genauen Ankerpositionierung.

Ein Seitenflügel 1590 der Ventilschließfeder 1474 verläuft an einer Stirnseite des Lagers 434. In der folgenden Fig. 15 wird dies detaillierter beschrieben.

Fig. 15 zeigt eine schematische Darstellung in einer Ansicht von unten eines Kippankerventils 104 gemäß einem Ausführungsbeispiel der vorliegenden Erfindung. Bei dem Kippankerventil 104 kann es sich um ein Ausführungsbeispiel eines in den vorangegangenen Figuren gezeigten Kippankerventils 104 handeln. Die Stelleinrichtung 210 wird von der Halbschale 756 eingefasst. In dem gezeigten Ausführungsbeispiel ist die Stelleinrichtung 210 als ein Stanzprägeblech gefertigt. Die Stelleinrichtung 210 weist spiegelsymmetrisch zwei Kerben 1586 auf, durch die die spiegelsymmetrische Ventilschließfeder 1474 für einen Seitenwechsel geführt ist. Das Lager 434 ist als ein Nadellager ausgebildet. Eine Nadelrolle 1588 wird in einer in der Stelleinrichtung 210 ausgebildeten Lagerhalbschale geführt. Eine Länge der Nadelrolle 1588 entspricht weitgehend einem Durchmesser oder einer Erstreckung der Stelleinrichtung 210. Die als Drahtbiegeteil ausgeformte Ventilschließfeder 1474 ist derart ausgeformt, dass die Stelleinrichtung 210 im Lagerbereich fixiert wird. Eine Vertikalführung der Nadelrolle 1588 wird durch eine stirnseitige Federabstützung erzielt. Die stirnseitige Federabstützung des Lagers 434 wird durch einen Seitenflügel 1590 der Ventilschließfeder 1474 erzielt. Das Dichtelement 764, teilweise auch als Ventilelement oder Ventilgummi bezeichnet, und das Dämpferelement 1478 sind in dem gezeigten Ausführungsbeispiel einstückig als seitlich einsteckbare Einheit ausgeführt. Die Einheit aus Dichtelement 764 und Dämpferelement 1478 ist in einem in der Stelleinrichtung 210 ausgeformten Sackloch angeordnet. Das Dicht- und Dämpferelement kann auch aus zwei einzelnen Bauteilen mit jeweils eigenem Sackloch ausgeführt werden.

An der dem Lager 434 gegenüberliegenden Seite greift die Schnappfeder 1472 in die Stelleinrichtung 210 ein. Die Schnappfeder 1472 ist als ein Drahtbiegeteil ausgeformt. Die beiden Enden der Schnappfeder 1472 sind mit der als Gehäuse fungierenden Halbschale 756 in einem Ankerpunkt 1592 verbunden. Als wirksame Länge der Schnappfeder 1472 ergibt sich ein horizontaler Abstand 1594 zwischen der Verbindung der Schnappfeder 1472 mit der Halbschale 756 und einem Eingriffspunkt der Schnappfeder 1472 in die Stelleinrichtung 210.

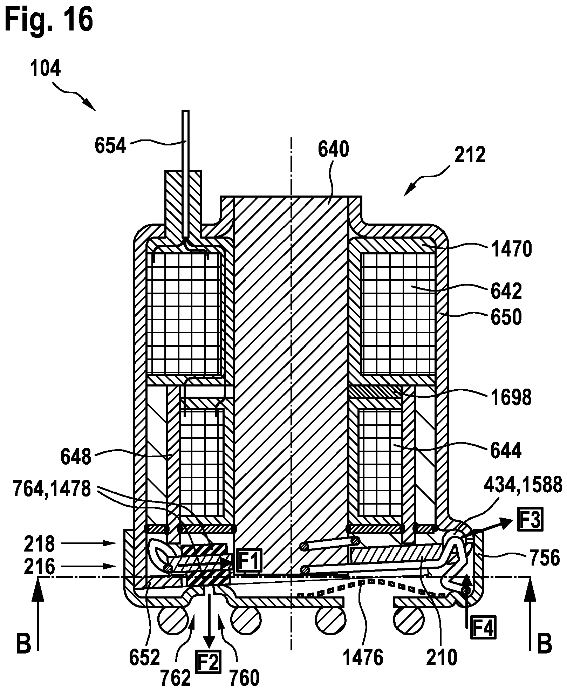

In der Darstellung in Fig. 15 ist eine Schnittachsen A eingezeichnet. Die Schnittachse A verläuft horizontal mittig. Entsprechende zu Fig. 15 gehörige Schnittbilder sind in den folgenden Figuren Fig. 16 bis Fig. 19 dargestellt.

Fig. 16 bis Fig. 19 zeigt eine schematische Schnittdarstellung eines Kippankerventils 104 gemäß einem Ausführungsbeispiel der vorliegenden Erfindung. Unter einem Kippankerventil 104 kann ein bistabiles Magnetventil mit Kippanker verstanden werden. In diesem Fall handelt es sich bei der Stelleinrichtung 210 um einen Kippanker 104. Bei dem Kippankerventil 104 kann es sich um ein Ausführungsbeispiel des in Fig. 15 gezeigten Kippankerventils 104 handeln. Dabei ist das Kippankerventil 104 als Schnittbild entlang der Schnittachse A dargestellt. Die Darstellung in Fig. 16 bis Fig. 19 entspricht weitgehend der Darstellung des Kippankerventils 104 in Fig. 14. Unterhalb der Stelleinrichtung 210 ist eine Schnittachse B dargestellt. Eine Darstellung von unten entlang der Schnittachse B ist in Fig. 15 dargestellt. Das Kippankerventil 104 weist eine dreipolige Schnittstelle 654 auf, sodass die erste Wickeleinrichtung 642 unabhängig von der zweiten Wickeleinrichtung 644 ansteuerbar ist. Zusätzlich zur Darstellung in Fig. 14 sind wirkende Kräfte eingezeichnet.

Zwischen der ersten Wickeleinrichtung 642 und der zweiten Wickeleinrichtung 644 ist eine geschlitzte Lochscheibe 1698 angeordnet. Die geschlitzte Lochscheibe 1698 verbindet den Spulenkern 640 mit dem Innengehäuse 648. Dabei ist die geschlitzte Lochscheibe 1698 im Wesentlichen aus einem magnetisch leitfähigen Material gefertigt. In der Kombination mit Lochscheiben können das Innengehäuse 648 und/oder das Außengehäuse 650 aus Rohren mit unterschiedlichem Durchmesser gefertigt sein.

In den Figuren Fig. 16 bis Fig. 19 sind Kraftvektoren F1, F2, F3, F4 eingezeichnet. F1 zeigt eine von der Schnappfeder 1472 in Richtung des Lagers 434 wirkende Kraft. F2 zeigt eine von der Stelleinrichtung 210 auf den Ventilsitz 760 wirkende Kraft, F3 zeigt eine vom Lager 434 auf eine im Außengehäuse 650 ausgebildete Lagerschale wirkende Kraft und F4 zeigt eine von der Ventilschließfeder auf das Lager 434 wirkende Kraft. Dabei kann unter F1 eine Fixierkraft und unter F2 eine Stellkraft verstanden werden.

Vorteilhaft weist das beschriebene Kippankerventil 104 eine hohe Zuverlässigkeit auf, da die Stelleinrichtung 210 magnetisch und mittels Federkraft in der jeweiligen Endlage gehalten wird.

Die Schnappfeder 1472 ist nur in einer der beiden Endpositionen 216, 218 wirksam. So ist die von der Schnappfeder 1472 ausgehende Wirkkraft F1 nur wirksam, wenn die Stelleinrichtung 210 sich in der zweiten Endposition 218 befindet. Ein derartiges Ausführungsbeispiel ist sehr unempfindlich gegen Fertigungstoleranzen und Montagetoleranzen. Eine Endposition Haltekraft ergibt sich aus der von der Schnappfeder ausgehenden Wirkkraft F1 (Fixierkraft) zusammen mit der von der Ventilschließfeder ausgehenden Wirkkraft F2 (Stellkraft).

In einem Ausführungsbeispiel stellen sich die vertikal wirksamen Kräfte F1 und F2 in Abhängigkeit der Endposition wie folgt dar.
In der ersten Endposition 216: F1 = 0 N + F2 = 2,5 N --> 2,5 N.
In der zweiten Endposition 218: F1 = -5,3 N + F2 = 2,8 N --> -2,5 N

Die genannten Größen beziehungsweise Kräfte sind exemplarisch angegeben, um eine Größenordnung oder ein Größenverhältnis zu verdeutlichen.

In Fig. 16 ist die Stelleinrichtung 210 in der ersten Endposition 216 angeordnet. Das Kippankerventil 104 befindet sich in einem unbestromten Ruhezustand. Die Wickeleinrichtungen 642, 644 sind unbestromt. Im Folgenden wird für ein besonderes Ausführungsbeispiel repräsentativ eine Kraft in Newton für die vier Kraftvektoren F1, F2, F3, F4 dargestellt: F1 beträgt 11 N, F2 beträgt 2,5 N, F3 beträgt 12 N und F4 beträgt 5 N.

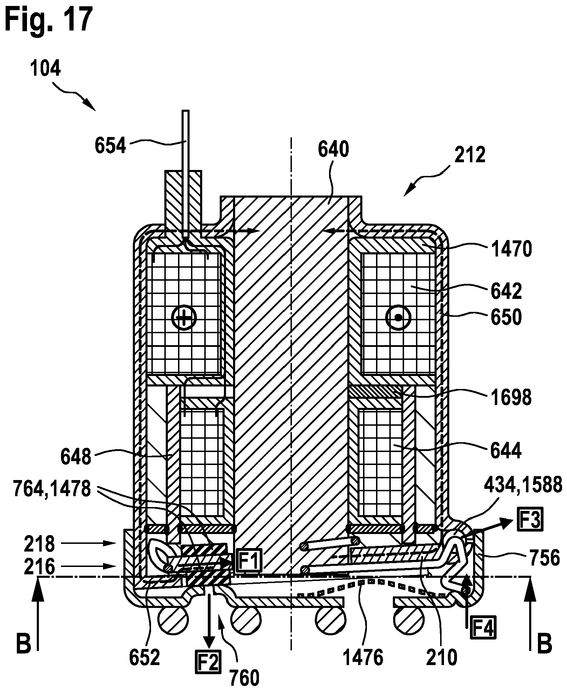

Im Unterschied zu Fig. 16 befindet sich das Kippankerventil 104 in Fig. 17 in einem bestromten Ruhezustand. So ist die erste Wickeleinrichtung 642 bestromt. So gilt für die vier Kraftvektoren F1, F2, F3, F4 analog zu dem in Fig. 16 dargestellten besonderen Ausführungsbeispiel: F1 beträgt 11 N, F2 beträgt 2,5 N, F3 beträgt 12 N und F4 beträgt 5 N.

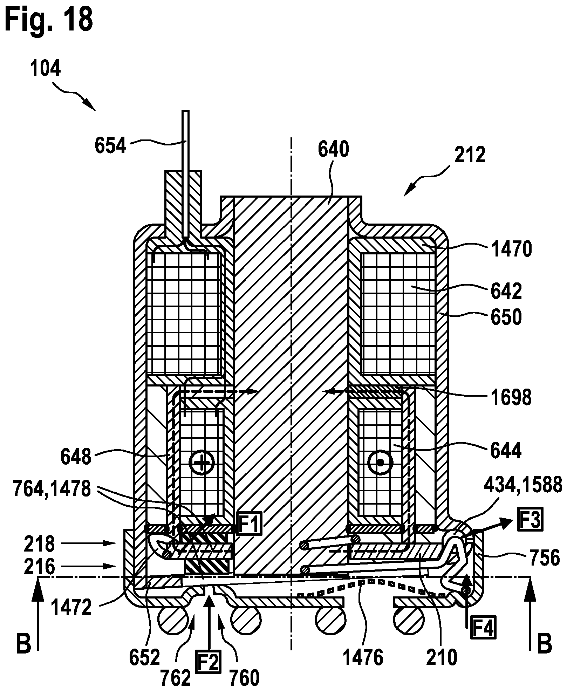

Fig. 18 zeigt das Kippankerventil 104 in einem aktivierten bestromten Zustand. Die erste Wickeleinrichtung 642 ist unbestromt, die zweite Wickeleinrichtung 644 ist bestromt. Die Stelleinrichtung 210 ist in der zweiten Endposition 218 angeordnet. So gilt für die vier Kraftvektoren F1, F2, F3, F4 analog zu dem in Fig. 16 bis Fig. 17 dargestellten besonderen Ausführungsbeispiel: F1 beträgt 11 N, F2 beträgt 2,5 N, F3 beträgt 11 N und F4 beträgt 5 N.

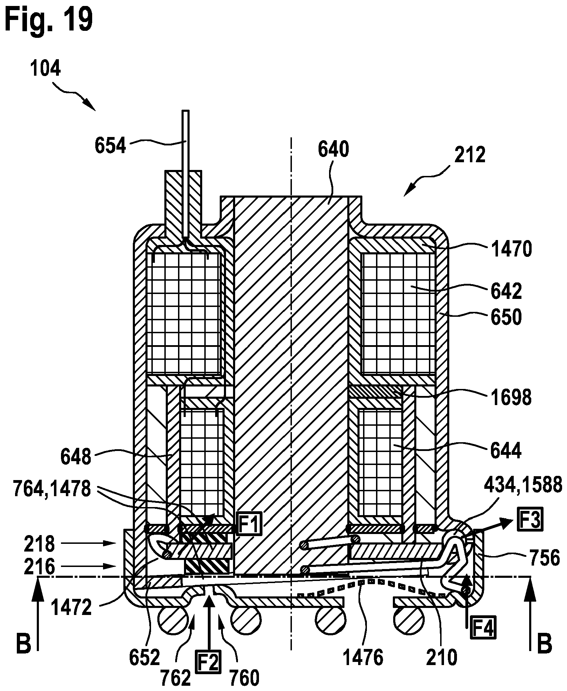

Fig. 19 zeigt das Kippankerventil 104 in einem aktivierten, nicht bestromten Zustand. Die beiden Wickeleinrichtungen 642, 644 sind unbestromt. Die Stelleinrichtung 210 ist in der zweiten Endposition 218 angeordnet. Für die vier Kraftvektoren F1, F2, F3, F4 gilt analog zu dem in Fig. 16 bis Fig. 17 dargestellten besonderen Ausführungsbeispiel: F1 beträgt 11 N, F2 beträgt 2,5 N, F3 beträgt 11 N und F4 beträgt 5 N.

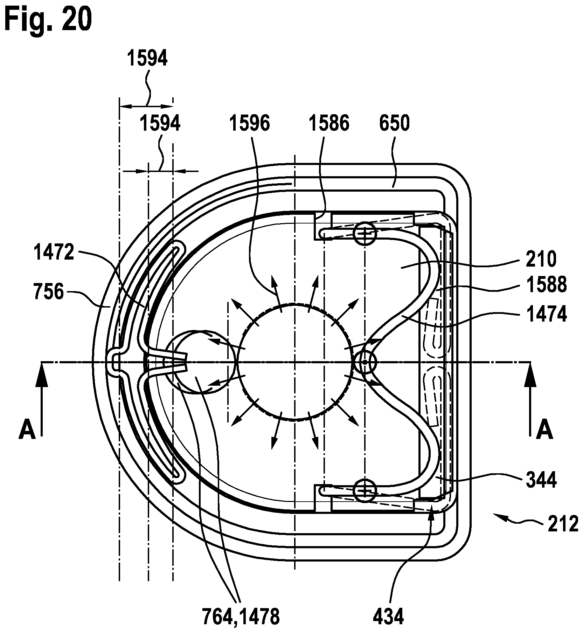

Fig. 20 zeigt eine schematische Darstellung in einer Ansicht von unten eines Kippankerventils 104 gemäß einem Ausführungsbeispiel der vorliegenden Erfindung. Die Darstellung des Kippankerventils 104 in Fig. 20 entspricht weitgehend dem in Fig. 16 gezeigten Kippankerventil, mit dem Unterschied, dass die Schnappfeder 1472 eine geänderte Form im Vergleich zu dem in Fig. 16 gezeigten Ausführungsbeispiel aufweist. Die beiden Ankerpunkte 1592 zum Befestigen der Enden der Schnappfeder 1472 in der Halbschale 756 sind viele näher zusammen angeordnet, in der direkten Nähe zur Spiegelachse A. Hierdurch vergrößert sich im Vergleich zu dem in Fig. 16 dargestellten Ausführungsbeispiel die wirksame Länge der Schnappfeder 1472.

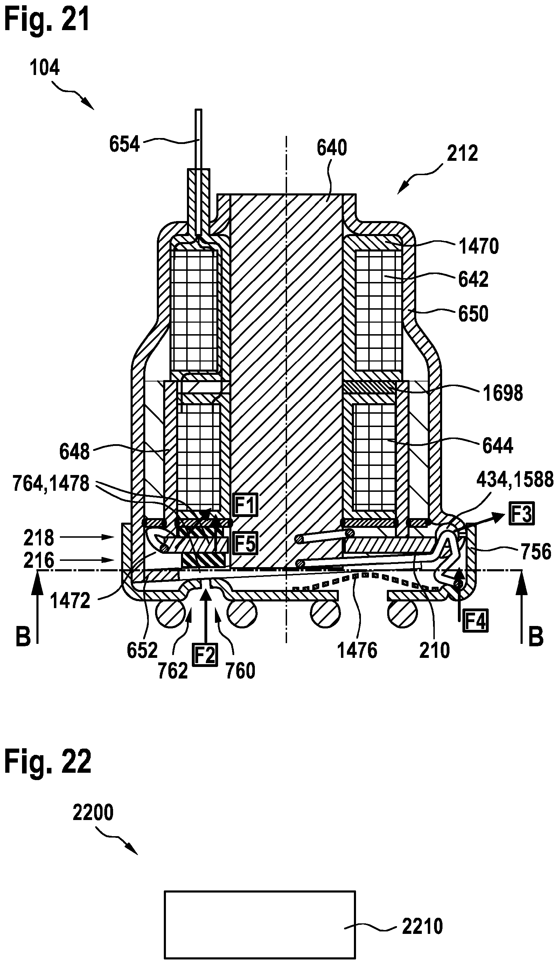

Fig. 21 zeigt eine schematische Schnittdarstellung eines Kippankerventils 104 gemäß einem Ausführungsbeispiel der vorliegenden Erfindung. Das Kippankerventil 104 in Fig. 21 entspricht weitgehend dem in Fig. 7 bis Fig. 13 gezeigten Ausführungsbeispiel eines Kippankerventils 104, mit dem Unterschied, dass die Stelleinrichtung 210 kein statisches Magnetfeld aufweist. Die Stelleinrichtung 210 weist ein magnetisch leitfähiges Material auf. Für die vier Kraftvektoren F1, F2, F3, F4 gilt analog zu dem in Fig. 16 bis Fig. 19 dargestellten besonderen Ausführungsbeispiel: F1 beträgt 5 N, F2 beträgt 2,5 N, F3 beträgt 99,5 N und F4 beträgt 5 N, eine weitere Kraft F5 beträgt 11 N.

Fig. 22 zeigt ein Ablaufdiagramm eines Verfahrens 2200 zum Betreiben eines Kippankerventils gemäß einem Ausführungsbeispiel der vorliegenden Erfindung. Bei dem Kippankerventil kann es sich um eine Variante eines in den vorangegangenen Figuren beschriebenen Kippankerventils handeln. Das Verfahren 2200 stellt ein Signal zum Ansteuern der Spule an eine Schnittstelle des Kippankerventils bereit, um eine Ventilstellung einzustellen. Bei dem Signal kann es sich um ein Stromsignal handeln. So kann die Spule des Kippankerventils bestromt werden oder unbestromt sein. So kann ansprechend auf das Signal eine Position des Ankers des Kippankerventils eingestellt werden. Ansprechend auf das Signal kann die Ventilstellung eingestellt werden. Beispielsweise weist das Verfahren 2200 einen Schritt 2210 des Ansteuerns auf, wobei im Schritt 2210 des Ansteuerns ein Signal zum Ansteuern der Spule an eine Schnittstelle des Kippankerventils bereitgestellt wird, um die Ventilstellung einzustellen.

Die beschriebenen Ausführungsbeispiele sind nur beispielhaft gewählt und können miteinander kombiniert werden.

### Bezugszeichenliste

- 100: Fahrzeug
- 102: Bremse
- 104: Kippankerventil

- 210: Stelleinrichtung
- 212: Betätigungseinrichtung
- 214: Halteeinrichtung
- 216: erste Endposition
- 218: zweite Endposition
- F_{F}: Fixierungskraft, Haltekraft
- F_{S}: Stellkraft
- F_{S1}: erste Stellkraft
- F_{S2}: zweite Stellkraft

- 320: erster Anschluss, Druckquelle
- 322: zweiter Anschluss, Arbeitsleistungsanschluss
- 324: dritter Anschluss, Entlüftungsanschluss

- 430: erste Spule
- 432: zweite Spule
- 434: Lager

- 640: Spulenkern
- 642: erste Wickeleinrichtung
- 644: zweite Wickeleinrichtung
- 646: Öffnung, Durchbruch
- 648: Innengehäuse
- 650: Außengehäuse
- 652: Anschlag
- 654: Schnittstelle
- 655: Steuersignal, Signal

- 756: Halbschale
- 758: Eingang
- 760: Ventilsitz
- 762: Ausgang
- 764: Dichtelement
- 766: Magnetfeld

- 1470: Spulenkörper
- 1472: Schnappfeder
- 1474: Ventilschließfeder
- 1476: Feinsieb
- 1478: Dämpferelement
- 1480: Lochscheibe
- 1482: Ventilraum
- 1484: Spulenraum

- 1586: Kerbe
- 1588: Nadelrolle
- 1590: Seitenflügel
- 1592: Ankerpunkt
- 1594: Abstand
- 1596: Magnetfeld
- A: Schnittachse

- 1698: geschlitzte Lochscheibe

- 2200: Verfahren
- 2210: Schritt des Ansteuerns

## Patentansprüche

1. Kippankerventil (104) für eine Bremse (102) eines Fahrzeugs (100), mit zumindest folgenden Merkmalen:
einer Stelleinrichtung (210), wobei die Stelleinrichtung (210) zwischen einer ersten Endposition (216) und einer zweiten Endposition (218) bewegbar ist;
einer Betätigungseinrichtung (212), die ausgebildet ist, die Stelleinrichtung (210) in die erste Endposition (216) und/oder die zweite Endposition (218) zu bewegen; und
einer Halteeinrichtung (214), die ausgebildet ist, eine auf die Stelleinrichtung (210) wirkende Fixierkraft bereitzustellen, wenn sich die Stelleinrichtung (210) in der ersten Endposition (216) und/oder der zweiten Endposition (218) befindet, um die Stelleinrichtung (210) in der ersten Endposition (216) und/oder der zweiten Endposition (218) zu fixieren,
**dadurch gekennzeichnet, dass**
die Betätigungseinrichtung (212) auf einer Seite der Stelleinrichtung (210) angeordnet ist, wobei die Betätigungseinrichtung (212) zumindest eine erste Wickeleinrichtung (642) und eine zweite Wickeleinrichtung (644), die um einen Spulenkern (640) angeordnet sind, aufweist, und wobei die Stelleinrichtung (210) eine Öffnung (646) aufweist, durch die der Spulenkern (640) führt.

2. Kippankerventil (104) gemäß Anspruch 1, bei dem die Stelleinrichtung (210) an einer Stirnseite der Stelleinrichtung (210) mittels eines Lagers (434) gelagert ist.

3. Kippankerventil (104) gemäß einem der vorangegangenen Ansprüche, bei der die Halteeinrichtung (214) eine Schnappfeder (1472) zum Fixieren der Stelleinrichtung (210) umfasst, wobei die Schnappfeder (1472) ausgebildet ist, die Betätigungseinrichtung (212) in der zweiten Endposition (218) zu halten, und/oder
bei der die Halteeinrichtung (214) eine Ventilschließfeder (1474) zum Bewegen der Stelleinrichtung (210) umfasst, wobei ein erster Teilbereich der Ventilschließfeder (1474) auf einer der Betätigungseinrichtung (212) zugewandten Seite der Stelleinrichtung (210) angeordnet ist und eine Kraft auf die Stelleinrichtung (210) ausübt, um die Stelleinrichtung (210) in Richtung der ersten Endposition (216) zu bewegen, und ein zweiter Teilbereich der Ventilschließfeder (1474) auf einer der Betätigungseinrichtung (212) abgewandten Seite der Stelleinrichtung (210) angeordnet ist, wobei die Ventilschließfeder (1474) ausgebildet ist, eine Schließkraft in eine von der Betätigungseinrichtung (212) wegführende Richtung auf die Stelleinrichtung (210) auszuüben, insbesondere wenn die Stelleinrichtung (210) in der ersten Endposition (216) angeordnet ist.

4. Kippankerventil (104) gemäß einem der vorangegangenen Ansprüche, bei dem die Halteeinrichtung (214) als zumindest ein Drahtbiegeteil ausgebildet ist.

5. Kippankerventil (104) gemäß einem der vorangegangenen Ansprüche, bei dem die Halteeinrichtung (214) zumindest einen Seitenflügel (1590) aufweist, der ausgebildet ist, das Lager (434) und/oder die Stelleinrichtung (210) vertikal zu führen, insbesondere durch eine stirnseitige Federabstützung vertikal zu führen.

6. Kippankerventil (104) gemäß einem der vorangegangenen Ansprüche, bei dem die Stelleinrichtung (210) zumindest in einem Teilbereich ein statisches Magnetfeld (1596) aufweist.

7. Kippankerventil (104) gemäß einem der vorangegangenen Ansprüche, mit einem Dichtelement (764), das an der der Betätigungseinrichtung (212) abgewandten Seite der Stelleinrichtung (210) angeordnet ist, sowie einer Halbschale (756), in der ein Ventilsitz (760) mit einem Ausgang (762) und einem Eingang (758) für ein Fluid ausgebildet ist, wobei der Ausgang (762) in der ersten Endposition (216) der Stelleinrichtung (210) mittels des Dichtelements (764) fluiddicht verschließbar ist.

8. Kippankerventil (104) gemäß einem der vorangegangenen Ansprüche, mit einem Dämpferelement (1478), das an der der Betätigungseinrichtung (212) zugewandten Seite der Stelleinrichtung (210) angeordnet ist, wobei das Dämpferelement (1478) ausgebildet ist, bei einer Bewegung der Stelleinrichtung (210) in die zweite Endposition (218) eine mechanische Schwingung der Stelleinrichtung (210), insbesondere eine Vibration und/oder eine Erschütterung und/oder einen Stoß, zu dämpfen.

9. Kippankerventil (104) gemäß einem der Ansprüche 7 oder 8, bei dem das Dämpferelement (1478) und/oder das Dichtelement (764) zumindest teilweise aus einem Elastomer, insbesondere Gummi, gebildet ist.

10. Kippankerventil (104) gemäß einem der vorangegangenen Ansprüche, bei dem die erste Wickeleinrichtung (642) eine zur zweiten Wickeleinrichtung (644) umgekehrte Wickelrichtung um den Spulenkern (640) aufweist.

11. Kippankerventil (104) gemäß einem der vorangegangenen Ansprüche, bei dem die erste Wickeleinrichtung (642) und die zweite Wickeleinrichtung (644) gemeinsam ansteuerbar und/oder von Strom durchfließbar sind, insbesondere wobei die erste Wickeleinrichtung (642) und die zweite Wickeleinrichtung (644) jeweils ein magnetisches Feld mit entgegengesetzter Polarität erzeugen.

12. Kippankerventil (104) gemäß einem der vorangegangenen Ansprüche, mit einem Innengehäuse (648) und einem Außengehäuse (650), wobei das Innengehäuse (648) die zweite Wickeleinrichtung (644) umschließt, wobei das Innengehäuse (648) mit dem Spulenkern (640) zwischen der ersten Wickeleinrichtung (642) und der zweiten Wickeleinrichtung (644) verbunden ist, wobei das Außengehäuse (650) die erste Wickeleinrichtung (642), die zweite Wickeleinrichtung (644) und das Innengehäuse (648) umschließt, wobei das Außengehäuse (650) an einem der Betätigungseinrichtung (212) abgewandten ersten Ende des Spulenkerns (640) mit diesem verbunden ist, wobei ein erster Magnetfluss über den Spulenkern (640), die Betätigungseinrichtung (212) und das Außengehäuse (650) leitbar ist, und wobei ein zweiter Magnetfluss über den Spulenkern (640), die Betätigungseinrichtung (212) und das Innengehäuse (648) leitbar ist.

13. Kippankerventil (104) gemäß Anspruch 12, bei dem die Stelleinrichtung (210) beweglich zwischen einem Ende des Innengehäuses (648) und einem Ende des Außengehäuses (650) und/oder Anschlags (652) beweglich angeordnet ist.

14. Verfahren (2200) zum Betreiben eines Kippankerventils (104) gemäß einem der vorangegangenen Ansprüche, wobei ein Signal (655) zum Ansteuern der Betätigungseinrichtung (212) an eine Schnittstelle (654) des Kippankerventils (104) bereitgestellt wird, um eine Ventilstellung einzustellen.

## Claims

1. A tilting-armature valve 104 for a brake 102 of a vehicle 100, having at least the following features:
a control device 210, said control device 210 being movable between a first end position 216 and a second end position 218;
an actuating device 212, which is designed to move the control device 210 into the first end position 216 and/or the second end position 218; and
a holding device 214, which is designed to provide a fixing force acting on the control device 210 when the control device 210 is in the first end position 216 and/or the second end position 218 in order to fix the control device 210 in the first end position 216 and/or in the second end position 218,
**characterised in that**
the actuating device 212 is arranged on one side of the control device 210, the actuating device 212 having at least a first winding device 642 and a second winding device 644 which are arranged around a coil core 640, and the control device 210 having an opening 646 through which the coil core 640 passes.

2. A tilting-armature valve 104 according to claim 1, in which the control device 210 is mounted on a front face of the control device 210 by means of a bearing 434.

3. A tilting-armature valve 104 according to any of the preceding claims, in which the holding device 214 comprises a snap spring 1472 for fixing the control device 210, the snap spring 1472 being designed to hold the actuating device 212 in the second end position 218, and/or
in which the holding device 214 comprises a valve-closing spring 1474 for moving the control device 210, a first portion of said valve-closing spring 1474 being arranged on a side of the control device 210 facing the actuating device 212 and exerting a force on the control device 210 in order to move the control device 210 in the direction of the first end position 216, and a second portion of the valve-closing spring 1474 being arranged on a side of the control device 210 facing away from the actuating device 212, the valve-closing spring 1471 being designed to exert a closing force on the control device 210 in a direction leading away from the actuating device 212, in particular if the control device 210 is positioned in the first end position 216.

4. A tilting-armature valve 104 according to any of the preceding claims, in which the holding device 214 is designed as at least one bent wire part.

5. A tilting-armature valve 104 according to any of the preceding claims, in which the holding device 214 has at least one lateral blade 1590 that is designed to guide the bearing 434 and/or the control device 210 vertically, in particular to guide it vertically by means of a spring support on its front face.

6. A tilting-armature valve 104 according to any of the preceding claims, in which the control device 210 has a static magnetic field 1596 in at least one portion.

7. A tilting-armature valve 104 according to any of the preceding claims, having a sealing element 764 that is arranged on the side of the control device 210 facing away from the actuating device 212 and a hemispherical shell 756, in which are arranged a valve seat 760 having an outlet 762 and an inlet 758 for a fluid, it being possible to close the outlet 762 in a fluid-tight manner in the first end position 216 of the control device 210 by means of the sealing element 764.

8. A tilting-armature valve 104 according to any of the preceding claims, having a damper element 1478 that is arranged on the side of the control device 210 facing towards the actuating device 212, the damper element 1478 being designed to damp a mechanical oscillation of the control device 210, in particular a vibration and/or shaking and/or impact, when the control device 210 moves into the second end position 218.

9. A tilting-armature valve 104 according to one of claims 7 or 8, in which the damper element 1478 and/or the sealing element 764 is at least partially made of an elastomer, in particular rubber.

10. A tilting-armature valve 104 according to any of the preceding claims, in which the first winding device 642 has an opposite direction of winding around the coil core 640 to the second winding device 644.

11. A tilting-armature valve 104 according to any of the preceding claims, in which the first winding device 642 and the second winding device 644 can be activated together and/or have current flowing through them, in particular the first winding device 642 and the second winding device 644 each generating a magnetic field with opposite polarity.

12. A tilting-armature valve 104 according to any of the preceding claims, having an inner housing 648 and an outer housing 650, the inner housing 648 encompassing the second winding device 644, the inner housing 648 being connected to the coil core 640 between the first winding device 642 and the second winding device 644, the outer housing 650 encompassing the first winding device 642, the second winding device 644 and the inner housing 648, the outer housing 650 being connected to a first end of the coil core 640 facing away from the actuating device 212, it being possible to conduct a first magnetic flux via the coiling core 640, the actuating device 212 and the outer housing 650 and a second magnetic flux via the coil core 640, the actuating device 212 and the inner housing 648.

13. A tilting-armature valve 104 according to claim 12, in which the control device 210 is arranged movably between an end of the inner housing 648 and an end of the outer housing 650 and/or stop 652.

14. A method 2200 for operating a tilting-armature valve 104 according to any of the preceding claims, in which a signal 655 for activating the actuating device 212 is provided at an interface 654 of the tilting-armature valve 104 in order to set a valve position.

## Revendications

1. Soupape (104) à armature basculante pour un frein (102) d'un véhicule (100), ayant au moins les caractéristiques suivantes :
un dispositif (210) de réglage, dans lequel le dispositif (210) de réglage est mobile entre une première position (216) d'extrémité et une deuxième position (218) d'extrémité;
un dispositif (212) d'actionnement, qui est réalisé de manière à déplacer le dispositif (210) de réglage dans la première position (216) d'extrémité et/ou la deuxième position (218) d'extrémité; et
un dispositif (214) de maintien, qui est réalisé pour mettre à disposition une force de fixation agissant sur le dispositif (210) de réglage, si le dispositif (210) de réglage se trouve dans la première position (216) d'extrémité et/ou dans la deuxième position (218) d'extrémité, afin de fixer le dispositif (210) de réglage dans la première position (216) d'extrémité et/ou la deuxième position (218) d'extrémité,
**caractérisée en ce que**
le dispositif (212) d'actionnement est disposé sur un côté du dispositif (210) de réglage, le dispositif (212) d'actionnement comportant au moins un premier enroulement (642) et un deuxième enroulement (644), qui sont disposés autour d'un noyau (640) de bobine, et le dispositif (210) de réglage ayant une ouverture (646), par laquelle passe le noyau (640) de bobine.

2. Soupape (104) à armature basculante suivant la revendication 1, dans laquelle le dispositif (210) de réglage est monté sur une face avant du dispositif (210) de réglage au moyen d'un palier (434).

3. Soupape (104) à armature basculante suivant l'une des revendications précédentes, dans laquelle le dispositif (214) de maintien comporte un ressort (1472) à cliquet pour la fixation du dispositif (210) de réglage, le ressort (1472) à cliquet étant réalisé de manière à maintenir le dispositif (212) d'actionnement dans la deuxième position (218) d'extrémité, et/ou dans laquelle le dispositif (214) de maintien comporte un ressort (1474) de fermeture de soupape pour le déplacement du dispositif (210) de réglage, une première région partielle du ressort (1474) de fermeture de soupape étant disposé sur un côté du dispositif (210) de réglage qui est en face du dispositif (212) d'actionnement et exerçant une force sur le dispositif (210) de réglage, afin de déplacer le dispositif (210) de réglage en direction de la première position (216) d'extrémité, et une deuxième région partielle du ressort (1474) de fermeture de soupape est disposée sur un côté du dispositif (210) de réglage qui est à l'opposé du dispositif (212) d'actionnement, le ressort (1474) de fermeture de soupape étant réalisé de manière à ce qu'une force de fermeture soit exercée sur le dispositif (210) de réglage dans une direction s'éloignant du dispositif (212) d'actionnement, notamment si le dispositif (210) de réglage est disposé dans la première position (216) d'extrémité.

4. Soupape (104) à armature basculante suivant l'une des revendications précédentes, dans laquelle le dispositif (214) de maintien est réalisé en tant que au moins une pièce à fils pliés.

5. Soupape (104) à armature basculante suivant l'une des revendications précédentes, dans laquelle le dispositif (214) de maintien comporte au moins une aile (1590) latérale, qui est réalisée pour guider le palier (434) et/ou le dispositif (210) de réglage verticalement, notamment pour le guider verticalement par un support de ressort du côté avant.

6. Soupape (104) à armature basculante suivant l'une des revendications précédentes, dans laquelle le dispositif (210) de réglage comporte au moins dans une région partielle un champ magnétique (1596) statique.

7. Soupape (104) à armature basculante suivant l'une des revendications précédentes, comportant un élément (764) d'étanchéité, qui est disposé sur le côté du dispositif (210) de réglage à l'opposé du dispositif (212) d'actionnement, ainsi qu'une demi-coquille (756), dans laquelle il est formé un siège (760) de soupape comportant une sortie (762) et une entrée (758) pour un fluide, la sortie (762) pouvant être fermée de manière étanche au fluide dans la première position d'extrémité (216) du dispositif (210) de réglage au moyen de l'élément (764) d'étanchéité.

8. Soupape (104) à armature basculante suivant l'une des revendications précédentes, comportant un élément (1478) d'amortissement qui est disposé sur le côté du dispositif (210) de réglage faisant face au dispositif (212) d'actionnement, l'élément (1478) d'amortissement étant réalisé pour que lors d'un déplacement du dispositif (210) de réglage dans la deuxième position (218) d'extrémité il amortisse une oscillation mécanique du dispositif (210) de réglage, notamment une vibration et/ou un ébranlement et/ou un choc.

9. Soupape (104) à armature basculante suivant l'une des revendications 7 ou 8, dans laquelle l'élément (1478) d'amortissement et/ou l'élément (764) d'étanchéité est ou sont réalisé(s) au moins partiellement en un matériau élastomère, notamment en caoutchouc.

10. Soupape (104) à armature basculante suivant l'une des revendications précédentes, dans laquelle le premier enroulement (642) a un sens d'enroulement inversé par rapport à celui du deuxième enroulement (644) autour du noyau (640) de bobine.

11. Soupape (104) à armature basculante suivant l'une des revendications précédentes, dans laquelle le premier enroulement (642) et le deuxième enroulement (644) peuvent être commandés en commun et/ou sont traversés par du courant en commun, notamment le premier enroulement (642) et le deuxième enroulement (644) produisant des champs magnétiques respectifs ayant des polarités opposées.

12. Soupape (104) à armature basculante suivant l'une des revendications précédentes, comportant un boîtier (648) intérieur et un boîtier (650) extérieur, le boîtier (648) intérieur entourant le deuxième enroulement (644), le boîtier (648) intérieur étant relié au noyau (640) de bobine entre le premier enroulement (642) et le deuxième enroulement (644), le boîtier (650) extérieur entourant le premier enroulement (642), le deuxième enroulement (644) et le boîtier (648) intérieur, le boîtier (650) extérieur étant relié au noyau (640) de bobine à une première extrémité de celui-ci à l'opposé du dispositif (212) d'actionnement, un premier flux magnétique pouvant être conduit par l'intermédiaire du noyau (640) de bobine, du dispositif (212) d'actionnement et du boîtier (650) extérieur, et un deuxième flux magnétique pouvant être conduit par l'intermédiaire du noyau (640) de bobine, du dispositif (212) d'actionnement et du boîtier (648) intérieur.

13. Soupape (104) à armature basculante suivant la revendication 12, dans laquelle le dispositif (210) de réglage est mobile entre une extrémité du boîtier (648) intérieur et une extrémité du boîtier (650) extérieur et/ou de la butée (652).

14. Procédé (2200) pour faire fonctionner une soupape (104) à armature basculante suivant l'une des revendications précédentes, dans lequel un signal (655) pour commander le dispositif (212) d'actionnement est mis à disposition à un interface (654) de la soupape (104) à armature basculante, afin de régler une position de soupape.
